(19) Europäisches Patentamt
European Patent Office
Office européen des brevets

(11) **EP 4 542 997 A1**

(12) **EUROPEAN PATENT APPLICATION**
published in accordance with Art. 153(4) EPC

(43) Date of publication:
**23.04.2025 Bulletin 2025/17**

(21) Application number: **22947130.5**

(22) Date of filing: **20.06.2022**

(51) International Patent Classification (IPC):
*H04N 19/52* *(2014.01)*

(52) Cooperative Patent Classification (CPC):
**H04N 19/107; H04N 19/109; H04N 19/132;
H04N 19/147; H04N 19/167; H04N 19/186;
H04N 19/30; H04N 19/52; H04N 19/85**

(86) International application number:
**PCT/CN2022/099886**

(87) International publication number:
**WO 2023/245349 (28.12.2023 Gazette 2023/52)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **GUANGDONG OPPO MOBILE
TELECOMMUNICATIONS
CORP., LTD.
Dongguan, Guangdong 523860 (CN)**

(72) Inventor: **XIE, Zhihuang
Dongguan, Guangdong 523860 (CN)**

(74) Representative: **Taor, Simon Edward William et al
Venner Shipley LLP
200 Aldersgate
London EC1A 4HD (GB)**

(54) **LOCAL ILLUMINATION COMPENSATION METHODS, VIDEO ENCODING METHODS, VIDEO DECODING METHODS, APPARATUSES, AND SYSTEM**

(57) A local illumination compensation (LIC) method, a video coding method, apparatus, and system are provided. At a decoding end, if LIC is determined to be applied to a current block according to an LIC usage flag, an LIC mode applied to the current block is determined according to availability of neighbouring reconstructed samples of the current block. At an encoding end, if LIC is enabled for inter prediction of a current block, an LIC mode applied during trial encoding of the current block is determined according to availability of neighbouring reconstructed samples of the current block. A corresponding video coding method, device and system are further provided. As such, trial encoding in one or more LIC modes can be skipped according to availability of the neighbouring reconstructed samples of the current block, thereby reducing encoding time, eliminating data redundancy, reducing bits that need to be transmitted, and thus improving encoding performance.

FIG. 6

**Description**

TECHNICAL FIELD

Embodiments of the disclosure relate to, but not limited to, video technology, and more specifically, to a local illumination compensation (LIC) method, a video coding method, apparatus, and system.

BACKGROUND

At present, in common video coding standards such as H.266/versatile video coding (WC), a block-based hybrid coding framework is adopted. Each picture in a video is partitioned into square largest coding units (LCU) of the same size (for example, 128×128 or 64×64). Each LCU can be partitioned into rectangular coding units (CU) according to a certain rule. The CU may be further partitioned into prediction units (PU), transform units (TU), and the like. The hybrid coding framework includes modules such as prediction, transform, quantization, entropy coding, and an in-loop filter. The prediction module includes intra prediction and inter prediction. Inter prediction includes motion estimation and motion compensation. Since there is strong correlation between neighbouring samples in a picture of a video, spatial redundancy between neighbouring samples is eliminated by means of intra prediction in video coding technology. Since there is high similarity between neighbouring pictures in a video, time redundancy between neighbouring pictures is eliminated by means of inter prediction in video coding technology. As such, encoding efficiency can be improved. However, the existing inter prediction method still needs to be improved to obtain higher encoding efficiency.

SUMMARY

The following is a summary of the subject matter that will be described in detail in the disclosure. This summary is not intended to limit the scope of the claims.

An embodiment of the disclosure provides a local illumination compensation (LIC) method. The method is applied to a decoding end. The method includes the following. An LIC usage flag of a current block is parsed. If LIC is determined to be applied to the current block according to the LIC usage flag, an LIC mode applied to the current block is determined according to availability of neighbouring reconstructed samples of the current block. LIC is applied according to the determined LIC mode, when performing inter prediction on the current block.

An embodiment of the disclosure further provides a video decoding method. The method includes the following. If a first inter mode is determined to be applied to a current block, a sequence-level syntax element and a picture-level syntax element related to usage of LIC are obtained. If it is determined, according to the sequence-level syntax element and the picture-level syntax element, that the LIC is enabled for inter prediction of the current block, LIC is applied when performing inter prediction on the current block according to the LIC method applied to the decoding end in any embodiment of the disclosure.

An embodiment of the disclosure further provides an LIC method. The method is applied to an encoding end. The method includes the following. If LIC is enabled for inter prediction of a current block, an LIC mode applied during trial encoding of the current block is determined according to availability of neighbouring reconstructed samples of the current block. Trial encoding is performed on the current block by applying the determined LIC mode, and a rate-distortion cost is calculated. Whether to apply LIC when performing inter prediction on the current block is determined according to the rate-distortion cost.

An embodiment of the disclosure further provides a video encoding method. The method includes the following. If a first inter mode is applied to a current block, a sequence-level syntax element and a picture-level syntax element related to LIC are obtained. If it is determined, according to the sequence-level syntax element and the picture-level syntax element, that LIC is enabled for inter prediction of the current block, LIC is applied when performing inter prediction on the current block according to the LIC method applied to the encoding end described in any embodiment of the disclosure.

An embodiment of the disclosure further provides an LIC apparatus. The apparatus includes a processor and a memory configured to store computer programs. The processor configured to implement the LIC method according to any embodiment of the disclosure when executing the computer programs.

An embodiment of the disclosure further provides a video decoding apparatus. The apparatus includes a processor and a memory configured to store computer programs. The processor is configured to implement the video decoding method according to any embodiment of the disclosure when executing the computer programs.

An embodiment of the disclosure further provides a video encoding apparatus. The apparatus includes a processor and a memory configured to store computer programs. the processor can implement the video encoding method according to any embodiment of the disclosure when executing the computer programs.

An embodiment of the disclosure further provides a video coding system. The system includes a video encoding apparatus described in any embodiment of the disclosure and a video decoding apparatus described in any embodiment of the disclosure.

An embodiment of the disclosure further provides a non-transitory computer-readable storage medium. The computer-readable storage medium is configured to store computer programs which, when executed by a processor, are operable to implement the LIC according to any embodiment of the disclosure is implemented, or implement the video decoding method described in any embodiment of the disclosure, or implement the video encoding method described in any embodiment of the disclosure.

An embodiment of the disclosure further provides a bitstream. The bitstream is generated according to the video encoding method described in any embodiment of the disclosure.

Other aspects will become apparent after reading and understanding the accompanying drawings and detailed description.

BRIEF DESCRIPTION OF THE DRAWINGS

The accompanying drawings are used for facilitating understanding of embodiments of the disclosure, constitute part of the specification, and are used for explaining technical solutions of the disclosure together with embodiments of the disclosure, but do not constitute limitation on the technical solutions of the disclosure.

FIG. 1A is a schematic diagram of a coding system according to an embodiment of the disclosure.

FIG. 1B is an architectural diagram of an encoding end according to an embodiment of the disclosure.

FIG. 1C is an architectural diagram of a decoding end according to an embodiment of the disclosure.

FIG. 2A and FIG. 2B are schematic diagrams illustrating two pictures which differ in illumination.

FIG. 3A is a schematic diagram illustrating neighbouring reconstructed samples of a reference block, and FIG. 3B is a schematic diagram illustrating neighbouring reconstructed samples of a current block according to an embodiment of the disclosure.

FIG. 4 is a schematic diagram illustrating linear transformation on a prediction block of a current block by applying local illumination compensation (LIC) according to an embodiment of the disclosure.

FIG. 5A is a schematic diagram illustrating linear transformation on a prediction block of a current block by using only top neighbouring reconstructed samples of the current block and top neighbouring reconstructed samples of a reference block according to an embodiment of the disclosure.

FIG. 5B is a schematic diagram illustrating linear transformation on a prediction block of a current block by using only left neighbouring reconstructed samples of the current block and left neighbouring reconstructed samples of a reference block according to an embodiment of the disclosure.

FIG. 6 is a flowchart of an LIC method applied to an encoding end according to an embodiment of the disclosure.

FIG. 7 is a flowchart of a video encoding method according to an embodiment of the disclosure.

FIG. 8 is a flowchart of an LIC method applied to a decoding end according to an embodiment of the disclosure.

FIG. 9 is a flowchart of a video decoding method according to an embodiment of the disclosure.

FIG. 10 is a schematic diagram of an LIC apparatus according to an embodiment of the disclosure.

DETAILED DESCRIPTION

Multiple embodiments are described in the disclosure, but such elaboration is intended for illustration rather than limitation. It will be apparent to those of ordinary skill in the art that, there can be other embodiments and implementations within the protection scope of the embodiments described in the disclosure.

In the elaborations of the disclosure, terms such as "exemplary" or "for example" are used to indicate an example, an illustration, or an explanation. Any embodiment described as "exemplary" or "for example" in the disclosure shall not be construed as preferable or advantageous over other embodiments. The term "and/or" in the disclosure describes an association between associated objects, and indicates that there may be three relationships. For example, *A* and/or *B* may mean *A* alone, both *A* and *B* exist, and *B* alone. "A plurality of" or "multiple" means two or more than two. In addition, in order to describe clearly technical solutions of embodiments of the disclosure, terms such as "first" and "second" are used to distinguish the same items or similar items having substantially the same functions and effects. Those skilled in the art can understand that terms such as "first" and "second" do not limit the quantity and the execution order, and do not mean that there must be a difference between items.

When describing exemplary embodiments, the methods and/or procedures may be presented as a particular sequence of steps in the specification. However, if the method or procedure does not depend on the particular order of steps described herein, the method or procedure shall not be limited to the particular order of steps described. It can be understood by those of ordinary skill in the art that other sequences of steps are also possible. Thus, the particular order of steps described in the specification shall not be construed as a limitation on the claims. In addition, the claims regarding the methods and/or procedures shall not be limited to implementing the steps in the described order. It can be understood by those of ordinary skill in the art that these orders can be changed without departing from the spirit and scope of embodiments of the disclosure.

The local illumination compensation (LIC) method and the video coding method provided in embodiments of the disclosure can be applied to various video coding standards, such as H.264/advanced video coding (AVC), H.265/high efficiency video coding (HEVC), H.266/versatile video coding (VVC), audio video coding standard (AVS), and other standards proposed by moving picture experts group (MPEG), alliance for open media (AOM), and joint video experts team (JVET), as well as extensions of these standards, or any other customized standard, etc.

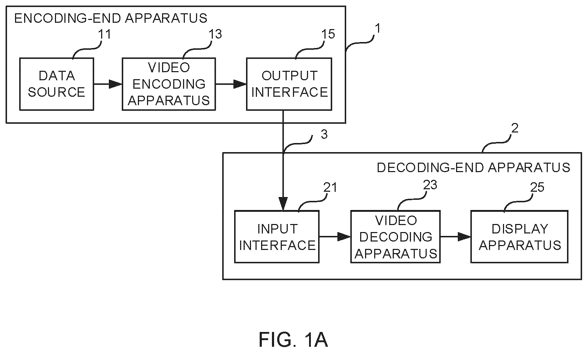

FIG. 1A is a block diagram of a video coding system that can be applied to embodiments of the disclosure. As illustrated in FIG. 1A, the system includes an encoding-end apparatus 1 and a decoding-end apparatus 2. The encoding-end apparatus 1 is configured to generate a bitstream. The decoding-end apparatus 2 is configured to decode the bitstream. The decoding-end apparatus 2 can receive the bitstream from the encoding-end apparatus 1 via a link 3. The link 3 includes one or more media or apparatuses capable of transmitting the bitstream from the encoding-end apparatus 1 to the decoding-end apparatus 2. In an example, the link 3 includes one or more communication media that enable the encoding-end apparatus 1 to transmit the bitstream directly to the decoding-end apparatus 2. The encoding-end apparatus 1 can modulate the bitstream according to communication standards (such as a wireless communication protocol) and transmit the modulated bitstream to the decoding-end apparatus 2. The one or more communication media can include wireless and/or wired communication media. The one or more communication media can form a part of a packet-based network. In another example, the bitstream can also be output from an output interface 15 to a storage apparatus, and the decoding-end apparatus 2 can read stored data from the storage apparatus through streaming or downloading.

As illustrated in FIG. 1A, the encoding-end apparatus 1 includes a data source 11, a video encoding apparatus 13, and an output interface 15. The data source 11 may include a video capture apparatus (e.g., a camera), an archive containing previously captured data, a feeding interface for receiving data from a content provider, a computer graphics system for generating data, or a combination thereof. The video encoding apparatus 13 can encode data from the data source 11 and output the encoded data to the output interface 15. The output interface 15 can include at least one of a regulator, a modem, or a transmitter. The decoding-end apparatus 2 includes an input interface 21, a video decoding apparatus 23, and a display apparatus 25. The input interface 21 includes at least one of a receiver or a modem. The input interface 21 can receive the bitstream via the link 3 or from the storage apparatus. The video decoding apparatus 23 is configured to decode the received bitstream. The display apparatus 25 is configured to display the decoded data, and the display apparatus 25 can be integrated with other apparatuses of the decoding-end apparatus 2 or disposed separately. The decoding end may not include the display apparatus 25. In other examples, the decoding end may include other apparatuses or devices to which the decoded data is applicable.

Based on the video coding system illustrated in FIG. 1A, various video coding methods can be used for video compression and decompression.

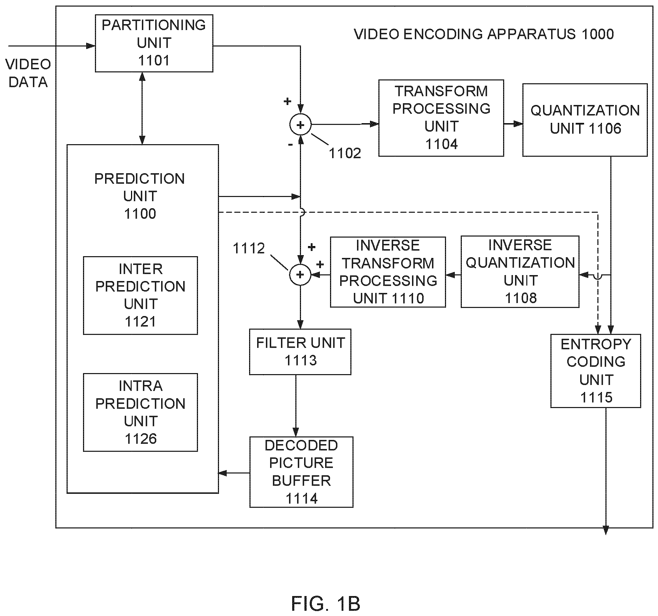

FIG. 1B is a block diagram of an exemplary video encoding apparatus to which embodiments of the disclosure can be applied. As illustrated in FIG. 1B, the video encoding apparatus 1000 includes a prediction unit 1100, a partitioning unit 1101, a residual generation unit 1102 (which is represented by a circle with plus sign subsequent to the partitioning unit 1101), a transform processing unit 1104, a quantization unit 1106, an inverse quantization unit 1108, an inverse transform processing unit 1110, a reconstruction unit 1112 (which is represented by a circle with a plus sign subsequent to the inverse transform processing unit 1110), a filter unit 1113, a decoded picture buffer 1114, and an entropy coding unit 1115. The prediction unit 1100 includes an inter prediction unit 1121 and an intra prediction unit 1126. The decoded picture buffer 1114 can also be referred to as a buffer for decoded picture, etc. The video encoder 20 can also include more, fewer, or different functional components than those in the example. For example, the transform processing unit 1104 and the inverse transform processing unit 1110 can be eliminated in some cases.

The partitioning unit 1101 is configured to partition, in cooperation with the prediction unit 1100, received video data into slices, coding tree units (CTU), or other larger units. The video data received by the partitioning unit 1101 can be a video sequence of video frames such as an I-frame, a P-frame, or a B-frame.

The prediction unit 1100 can partition a CTU into coding units (CU), and perform intra prediction encoding or inter prediction encoding on the CU. When performing intra prediction and inter prediction on the CU, the CU can be partitioned into one or more prediction units (PU).

The inter prediction unit 1121 can perform inter prediction on a PU to generate prediction data for the PU, where the prediction data includes a prediction block for the PU, motion information of the PU, and various syntax elements. The inter prediction unit 1121 can include a motion estimation (ME) unit and a motion compensation (MC) unit. The motion estimation unit can be used for motion estimation to generate a motion vector, and the motion compensation unit can be used for obtaining or generating a prediction block according to the motion vector.

The intra prediction unit 1126 can perform intra prediction on a PU to generate prediction data for the PU, where the prediction data for the PU can include a prediction block for the PU and various syntax elements.

The residual generation unit 1102 can generate a residual block for a CU by subtracting a prediction block for a PU obtained by partitioning the CU from an original block for the CU.

The transform processing unit 1104 can partition a CU into one or more transform units (TUs), where partitioning of PUs can be different from partitioning of TUs. A TU-associated residual block is a sub-block obtained by partitioning a residual block for a CU. A TU-associated coefficient block is generated by performing one or more transforms on the TU-associated residual block.

The quantization unit 1106 can quantize coefficients in a coefficient block based on a selected quantization parameter (QP), and can adjust the degree of quantization for the coefficient block by adjusting the QP.

The inverse quantization unit 1108 can perform inverse quantization on the coefficient block, and the inverse transform unit 1110 can perform inverse transform on the coefficient block, so as to obtain a TU-associated reconstructed residual block.

The reconstruction unit 1112 can add the reconstructed residual block to the prediction block generated by the prediction unit 1100, so as to generate a reconstructed picture.

The filter unit 1113 is configured to perform in-loop filtering on the reconstructed picture, and buffer the reconstructed picture subject to filtering in the decoded picture buffer 1114 as a reference picture. The intra-prediction unit 1126 can extract a reference picture for blocks neighbouring a PU from the decoded picture buffer 1114 to perform intra prediction. The inter prediction unit 1121 can perform inter prediction on a PU in a current picture by using a reference picture for a previous picture buffered in the decoded picture buffer 1114.

The entropy coding unit 1115 can perform entropy coding on the received data, such as a syntax element, a quantized coefficient block, motion information, and the like.

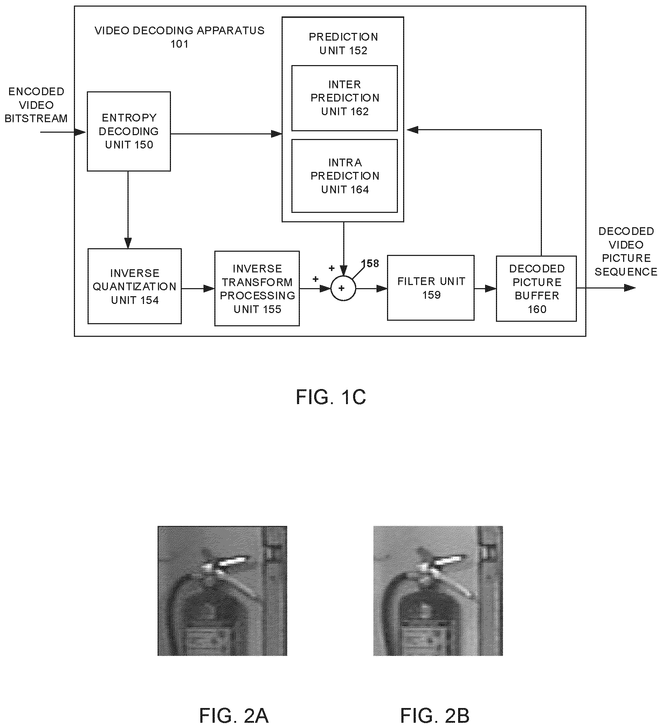

FIG. 1C is a block diagram of an exemplary video decoding apparatus to which embodiments of the disclosure can be applied. As illustrated in FIG. 1C, the video decoding apparatus 101 includes an entropy decoding unit 150, a prediction unit 152, an inverse quantization unit 154, an inverse transform processing unit 156, a reconstruction unit 158 (which is represented by a circle with a plus sign subsequent to the inverse transform processing unit 155), a filter unit 159, and a decoded picture buffer 160. In other embodiments, the video decoder 30 can include more, fewer, or different functional components. For example, the inverse transform processing unit 155 can be eliminated in some cases.

The entropy decoding unit 150 can perform entropy decoding on a received bitstream, and extract information such as a syntax element, a quantized coefficient block, and motion information of a PU. The prediction unit 152, the inverse quantization unit 154, the inverse transform processing unit 156, the reconstruction unit 158, and the filter unit 159 can perform their respective operations based on the syntax element extracted from the bitstream.

The inverse quantization unit 154 can perform inverse quantization on a quantized TU-associated coefficient block.

The inverse transform processing unit 156 can perform one or more inverse transforms on the inverse quantized coefficient block so as to generate a reconstructed residual block for a TU.

The prediction unit 152 includes an inter prediction unit 162 and an intra prediction unit 164. If a PU is encoded through intra encoding, the intra prediction unit 164 can determine an intra prediction mode for the PU based on the syntax element parsed from the bitstream, perform intra prediction according to the determined intra prediction mode and reconstructed reference information neighbouring the PU obtained from the decoded picture buffer 160, and generate a prediction block for the PU. If the PU is encoded through inter encoding, the inter prediction unit 162 can determine one or more reference blocks for the PU according to motion information of the PU and a corresponding syntax element, and generate a prediction block for the PU based on the reference blocks obtained from decoded picture buffer 160.

The reconstruction unit 158 can obtain a reconstructed picture based on a predicted block for a PU generated by the prediction unit 152 and a TU-associated reconstructed residual block.

The filter unit 159 can perform in-loop filtering on the reconstructed picture, where the reconstructed picture subject to filtering is stored in the decoded picture buffer 160. The decoded picture buffer 160 can provide reference pictures for subsequent motion compensation, intra prediction, inter prediction, etc., or can output the reconstructed picture subject to filtering as decoded video data in order for presentation on a display apparatus.

With aid of the video encoding apparatus and the video decoding apparatus described above, the following basic coding process can be performed. At an encoding end, a picture is partitioned into blocks, a prediction block of a current block is generated through intra prediction or inter prediction of the current block or through other algorithms, the prediction block is subtracted from an original block of the current block to obtain a residual block, transform and quantization is performed on the residual block to obtain a quantization coefficient, and entropy coding is performed on the quantization coefficient to generate a bitstream. At a decoding end, intra prediction or inter prediction is performed on a current block to generate a prediction block of the current block. On the other hand, inverse quantization and inverse transform is performed on a quantization coefficient obtained by parsing a bitstream, so as to obtain a residual block, and the prediction block is added to the residual block to obtain a reconstructed block, where the reconstructed block forms a reconstructed picture. A decoded picture is obtained by performing in-loop filtering on the reconstructed picture on a picture basis or on a block basis. At the encoding end, a decoded picture is obtained through operations similar to those performed at the decoding end, and the decoded picture obtained at the encoding end is generally referred to as a reconstructed picture. The decoded picture can be used as a reference picture for inter prediction of a subsequent picture. Block partition information determined at the encoding end, as well as mode information or parameter information for prediction, transformation, quantization, entropy coding, in-loop filtering, etc., are carried in the bitstream when necessary. At the decoding end, by parsing the bitstream or analyzing existing information, it is possible to determine the block partition information, as well as the mode information or the parameter information for prediction, transformation, quantization, entropy coding, in-loop filtering, etc., that are the same as such information at the encoding end, so as to ensure that the decoded picture obtained at the encoding end is the same as the decoded picture obtained at the decoding end.

Although a block-based hybrid coding framework is used as an example in the foregoing elaborations, embodiments of the disclosure are not limited thereto. With development of technology, one or more modules in the framework and one or more steps in the process can be replaced or optimized.

LIC is an inter-prediction encoding technology, and is also referred to as "illumination compensation" for short in the disclosure. LIC relates to inter prediction in a hybrid video-encoding framework, and is applied at both an encoding end and a decoding end.

In inter-prediction encoding, a reference block used for inter prediction of a current block can be determined according to motion vector (MV) information, where the reference block usually comes from a different picture (for example, a different frame). Video contents of different pictures often have changes in illumination intensity, for example, increase or decrease of illumination intensity over time, or change in illumination intensity due to obstruction of dark clouds or a camera flash. The difference between previous and subsequent pictures mainly lies in the intensity of the direct current (DC) component of the picture and is presented as changes in luminance, but there is substantially no change in texture information. However, these changes cannot be predicted effectively by means of motion estimation and motion compensation in inter prediction technology. Due to influence of large DC-component value, more residual information is likely to be encoded during encoding. By means of LIC, it is possible to remove these DC redundant information, and predict luma changes accurately and implement corresponding compensation, which makes residual information smaller and improves encoding efficiency.

Taking FIG. 2A and FIG. 2B as an example, texture information of the two pictures is substantially the same, and the difference lies in change of luminance between the two. Since the picture in FIG. 2B appears very bright due to illumination by a camera flash while the picture in FIG. 2A is illuminated by normal natural light, there is a difference between the two, and such difference results in heavy burden in video encoding. Supposing that a corresponding reconstructed block in the picture in FIG. 2B is used as a reference block for a current block in the picture in FIG. 2A, texture information of the two is the same, but an overall residual is very large. The reason is that luma values of samples in the picture in FIG. 2B as a whole have an offset due to influence of the flash, and the residual between the two includes such offset. If the residual is directly transformed and quantized and then signalled into a bitstream, it will lead to high overhead.

In a first embodiment, an LIC method is provided. In the method, during digital video coding, an illumination difference is refined by using an illumination compensation model, to obtain a prediction block after illumination compensation, which can eliminate impact caused by a flash lamp or an illumination change, thereby achieving better overall prediction effect.

In this embodiment, a correlation of change between prediction samples in a coding block and reference samples is fitted with aid of a correlation between neighbouring reconstructed samples of the current block and neighbouring reconstructed samples of a reference block. If top neighbouring reconstructed samples and left neighbouring reconstructed samples of a current block in a current picture can be obtained, top neighbouring reconstructed samples and left neighbouring reconstructed samples of a reference block in a reference picture can also be obtained. A corresponding fitting model can be obtained by modeling the neighbouring reconstructed samples of the current block and the neighbouring reconstructed samples of the reference block, and the fitting model is referred to as an LIC model, or can be referred to as a linear model or a "model" for short.

In the disclosure, "neighbouring" refers to spatial neighbouring, and the reconstructed sample can also be referred to as a reference sample, a reconstructed reference sample, a template sample, a template reference sample, and the like.

In this embodiment, modeling for the LIC is model implemented through linear fitting. Illumination changes between the current block and the reference block are fitted by using a scaling parameter a and an offset parameter b, and a prediction value of a sample in the current block is updated by using a model parameter calculated. The formula is as follows:

$$\mathrm{Pred'}\ (\mathrm{x,y}) = \mathrm{a} \cdot \mathrm{Pred(x,y)} + \mathrm{b} \qquad\qquad (1)$$

Pred(x, y) represents a prediction value before illumination compensation (i. e. a prediction value which is not subject to illumination compensation), for example, a sample value in a reference picture that is pointed to by an MV at (x, y). Pred' (x, y) represents a prediction value after illumination compensation. a represents a scaling parameter in the model, and b represents an offset parameter in the model.

The update of the prediction value can be applied to both a luma component and a chroma component.

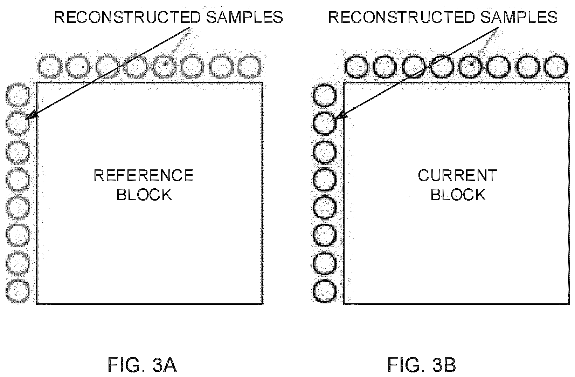

The scale parameter a and the offset parameter b are calculated according to the neighbouring reconstructed samples of the current block and the neighbouring reconstructed samples of the reference block. The reconstructed samples illustrated in FIG. 3A include top neighbouring reconstructed samples and left neighbouring reconstructed samples of the reference block, where the reconstructed samples in the reference picture can be obtained by performing interpolation on reconstructed samples. The reconstructed samples illustrated in FIG. 3B include top neighbouring reconstructed samples and left neighbouring reconstructed samples of the current block, and the reconstructed samples in the current picture can be reconstructed samples in the current picture. In the figures, the neighbouring reconstructed samples of the reference block and the neighbouring reconstructed samples of the current block are a single row or a single column, but the disclosure is not limited thereto.

By modeling the neighbouring reconstructed samples of the reference block and the neighbouring reconstructed samples of the current block and obtaining a linear relationship therebetween, the scaling parameter a and the offset parameter b can be obtained. The derivation formula is as follows:

$$\mathrm{Curr\_Rec_{neigh}} = \mathrm{a} \cdot \mathrm{Ref\_Rec_{neigh}} + \mathrm{b} \qquad\qquad (2)$$

In the formula, $\mathrm{Curr\_Rec_{neigh}}$ represents the neighbouring reconstructed sample of the current block, and $\mathrm{Ref\_Rec_{neigh}}$ represents the neighbouring reconstructed sample of the reference block.

In the disclosure, the current block can be a current CU, or a current PU, etc. in the current picture. The reference block is a reconstructed CU or PU used for inter prediction of the current block in the reference picture, and the location of the reference block is determined according to the current block and an MV. The current block and the reference block have the same size.

Before calculating an LIC model parameter for the current block, the number and positions of reconstructed samples for calculating the model parameter are determined according to the width and the height of the current block. In an example, if at least one of the width or the height of the current block is equal to 4, 4 top neighbouring reconstructed samples of the current block and 4 left neighbouring reconstructed samples of the current block are selected, so as to calculate the LIC model parameter. For example, if the width of the current block is 16 and the height of the current block is 4, all the 4 left neighbouring reconstructed samples of the current block are selected, and 4 out of 16 top neighbouring reconstructed samples of the current block are selected at a step size of 3, so as to calculate the LIC model parameter. In another example, if neither the width nor the height of the current block is equal to 4, the number of reconstructed samples selected from the top of the current block and the number of reconstructed samples selected from the left of the current block are determined based on the minimum between the width and the height of the current block. The number of reconstructed samples selected can be the logarithm of the minimum between the width and the height to 2 as the base, which is formulated as *sample_num* = $\log_2$(min(*width, height)),* where *sample_num* represents the number of reconstructed samples selected, and *width* and *height* represent the width and the height of the current block respectively. For example, if the minimum between the width and the height of the current block is 8, 3 reconstructed samples can be selected from the top of the current block, and 3 reconstructed samples can be selected from the left of the current block. The number of neighbouring reconstructed samples of the reference block used for calculating the LIC model parameter is the same as the number of neighbouring reconstructed samples of the current block used for calculating the LIC model parameter, and positions of the neighbouring reconstructed samples of the reference block used for calculating the LIC model parameter are in correspondence with positions of the neighbouring reconstructed samples of the current block used for calculating the LIC model parameter.

In an example of this embodiment, after the reconstructed samples for calculating the model parameter are obtained, the scaling factor a and the offset parameter b are obtained by means of least square error. The reconstructed sample obtained from the reference picture (i. e. the neighbouring reconstructed sample of the reference block) is represented by x, and the reconstructed sample obtained from the current picture (i. e. the neighbouring reconstructed sample of the current block) is represented by y; then the sum of reconstructed samples *x* obtained from the reference picture is represented by *sumX*, and the sum of reconstructed samples y obtained from the current picture is represented by *sumY*; the square sum of the reconstructed samples *x* obtained from the reference picture is represented by *sumXX*, and the sum of the product (the sum of element-wise products) of the reconstructed samples *x* obtained from the reference picture and the reconstructed samples y obtained from the current picture is represented by *sumXY*, then parameters a and b can be calculated according to the following formula:

$$a = (sumXY - sumXsumY) / (sumXX - sumXsumX)$$

$$b = sumY - a \cdot sumX$$

*sumXsumY* in the foregoing formula equals to *sumX\* sumY*. In the calculation process, calculation can be simplified through some shift operations, which are not described in detail herein. It should be noted that, the calculation of the model parameter is not limited to the algorithm in the foregoing example.

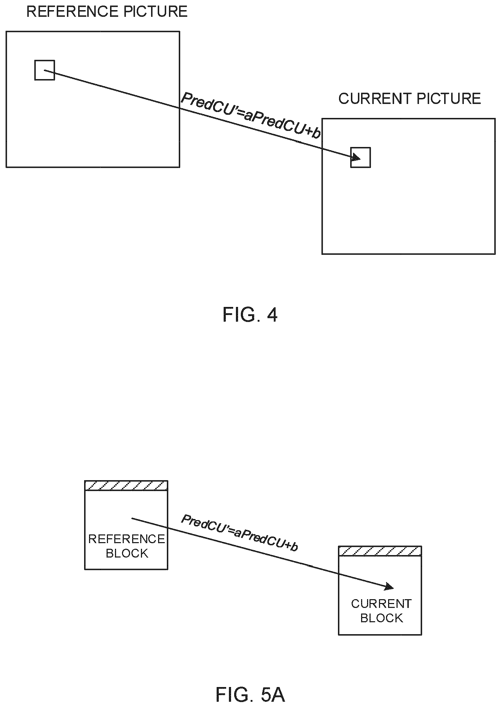

After the LIC model parameter (also referred to as linear model parameter) is obtained, linear transformation is performed on a prediction block obtained through motion compensation, so as to obtain a prediction block after LIC, as illustrated in FIG. 4. In FIG. 4, a grid in a current picture represents a current block, a grid in a reference picture represents a reference block of the current block, *PredCU* represents a prediction block before LIC, and *PredCU'* represents a prediction block after LIC, and change of a prediction value after LIC is represented by formula (1).

In this embodiment, the LIC model parameter is calculated according to the top neighbouring reconstructed samples and the left neighbouring reconstructed samples of the current block and the top neighbouring reconstructed samples and the left neighbouring reconstructed samples of the reference block, which is referred to as an LIC_top-and-left (LIC_TL) mode, where T represents top, and L represents left. The LIC_TL mode can also be referred to as an original illumination compensation mode.

In the LIC_TL mode, the LIC model parameter is calculated according to the top neighbouring reconstructed samples and the left neighbouring reconstructed samples of the current block and the top neighbouring reconstructed samples and the left neighbouring reconstructed samples of the reference block. If both the top neighbouring reconstructed samples and the left neighbouring reconstructed samples of the current block are available, the top neighbouring reconstructed samples and the left neighbouring reconstructed samples of both the current block and the reference block (including the top neighbouring reconstructed samples and the left neighbouring reconstructed samples of the current block, and the top neighbouring reconstructed samples and the left neighbouring reconstructed samples of the reference block) are used to calculate the LIC model parameter. However, in the LIC_TL mode, it is not required that both the top neighbouring reconstructed samples and the left neighbouring reconstructed samples of the current block are available. If only the top neighbouring reconstructed samples of the current block are available, in the LIC_TL mode, only the top neighbouring reconstructed samples of both the current block and the reference block (including the top neighbouring reconstructed samples of the current block and the top neighbouring reconstructed samples of the reference block) are used to calculate the LIC model parameter. If only the left neighbouring reconstructed samples of the current block are available, in the LIC_TL mode, only the left neighbouring reconstructed samples of both the current block and the reference block (including the left neighbouring reconstructed samples of the current block and the left neighbouring reconstructed samples of the reference block) are used to calculate the LIC model parameter.

The LIC method in the LIC_TL mode in this embodiment can be applied to common inter prediction (i. e. inter mode), a merge prediction mode (i. e. merge mode), and a sub-block mode.

The LIC method in the LIC_TL mode in this embodiment is applicable only to a single-frame prediction mode, but is not applicable to a multi-frame bi-directional reference mode. In addition, there is a relationship between the illumination compensation method in this embodiment and other inter prediction methods adopted. In the current block, the illumination compensation method cannot be applied together with a bi-directional optical flow (BDOF) technology and a symmetric motion vector difference (SMVD) mode.

In a second embodiment, another two LIC modes are introduced: an LIC_top (LIC_T) mode and an LIC_left (LIC_L) mode. The two modes are extensions to the LIC_TL mode and are applied to advanced motion vector prediction (AMVP). Under a common test condition, by adopting the method in this embodiment, it is possible to achieve improvement of overall encoding performance by 0.07% without increasing decoder-side complexity.

In the LIC_T mode, only the top neighbouring reconstructed samples of the current block and the top neighbouring reconstructed samples of the reference block are used to calculate an LIC model parameter. In the LIC_TL mode, also only the top neighbouring reconstructed samples of the current block and the top neighbouring reconstructed samples of the reference block are used to calculate the LIC model parameter, if only the top neighbouring reconstructed samples of the current block are available. However, different from the LIC_TL mode, in the LIC_T mode, even though both the top neighbouring reconstructed samples and the left neighbouring reconstructed samples of the current block are available, only the top neighbouring reconstructed samples of the current block and the top neighbouring reconstructed samples of the reference block are used to calculate the LIC model parameter, as illustrated in FIG. 5A.

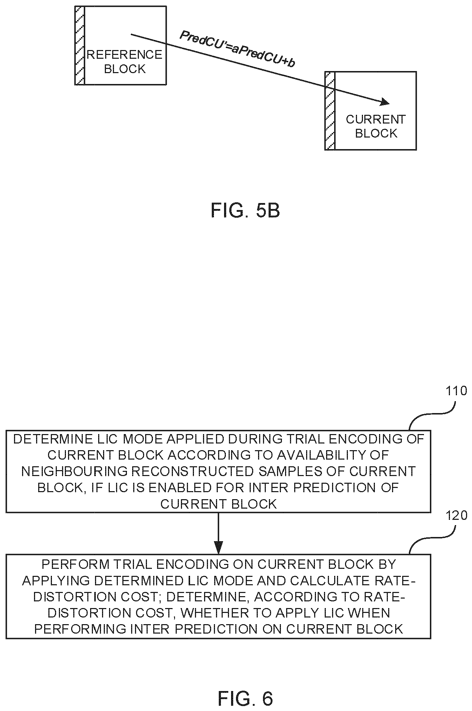

In the LIC_L mode, only the left neighbouring reconstructed samples of the current block and the left neighbouring reconstructed samples of the reference block are used to calculate the LIC model parameter. In the LIC_TL mode, also only the left neighbouring reconstructed samples of the current block and the left neighbouring reconstructed samples of the reference block are used to calculate the LIC model parameter, if only the left neighbouring reconstructed samples of the current block are available. However, different from the LIC_TL mode, in the LIC_L mode, even though both the top neighbouring reconstructed samples and the left neighbouring reconstructed samples of the current block are available, only the left neighbouring reconstructed samples of the current block and the left neighbouring reconstructed samples of the reference block are used to calculate the LIC model parameter, as illustrated in FIG. 5B.

However, in the second embodiment, if it is determined that LIC is enabled for inter prediction of the current block, trial encoding is performed by applying each of the three LIC modes and rate-distortion costs are calculated, so as to determine the optimal LIC mode. In this way, it is relatively simple in processing, for example, at a decoding end, the reconstructed samples of a current block which is located at a boundary is not checked during parsing of a bitstream, which will result in data redundancy.

For example, if LIC is applied to a current block located at the top boundary of a picture, only the left neighbouring reconstructed samples are available. When performing trial encoding by applying the LIC_TL mode, according to availability of the reconstructed samples, only the left neighbouring reconstructed samples of the current block and the left neighbouring reconstructed samples of the reference block are used to calculate the LIC model parameter. When performing trial encoding by applying the LIC_L mode, also only the left neighbouring reconstructed samples of the current block and the left neighbouring reconstructed samples of the reference block are used to calculate the LIC model parameter. That is, in this case, the LIC_TL mode is the same as the LIC_L mode, which results in repeated calculations. On the other hand, some bits indicating the LIC_L mode are also required in the bitstream. As a result, for a CU located at the boundary to which the illumination compensation technology is applied, the number of bits to be transmitted will be increased, thus increasing overhead. The same applies to the case where LIC is applied to a current block located at the left boundary of the picture, and in this case, the LIC_TL mode is the same as the LIC_T mode.

In addition, in the LIC_TL mode, the number of the reconstructed samples selected when the current block is at the boundary is the same as the number of reconstructed samples selected when the current block is not at the boundary, and the number of reconstructed samples selected is determined according to the minimum value between the width and the height. If the current block is at the top boundary of the picture and LIC is applied to the current block, and the size of the current block is $4 \times 32$, 4 out of 32 left neighbouring reconstructed samples of the current block will be selected at a step size of 8. Such kind of selection will result in large step size, which is in turn likely to result in a large offset and inaccuracy in calculation of the model parameter, and as a result, encoding performance will be degraded.

An embodiment of the disclosure provides an LIC method. The method is applied to an encoding end. As illustrated in FIG. 6, the method includes the following.

Step 110, if LIC is enabled for inter prediction of a current block, an LIC mode applied during trial encoding of the current block is determined according to availability of neighbouring reconstructed samples of the current block.

In this step, at an encoding end, prediction modes can be traversed. If a first inter mode is applied to the current block, an LIC-related syntax element is obtained, so as to determine whether LIC is enabled for inter prediction of the current block. If LIC is enabled, trial encoding needs to be performed, so as to determine, according to a rate-distortion cost, whether to apply LIC.

Step 120, trial encoding is performed on the current block by applying the determined LIC mode, and a rate-distortion cost is calculated. Whether to apply LIC when performing inter prediction on the current block is determined according to the rate-distortion cost.

In this step, after trial encoding is performed on the current block by applying the determined LIC mode and the rate-distortion cost is calculated, the LIC mode with the minimum rate-distortion cost is an optimal LIC mode. In this case, at the encoding end, other inter prediction technologies (also referred to as inter prediction modes), such as BDOF, SMVD, and the like, can be traversed, and then rate-distortion costs corresponding to these modes are calculated and compared with the rate-distortion cost of the optimal LIC mode. If the rate-distortion cost value of the optimal LIC mode is the smallest, it is determined that LIC is applied when performing inter prediction on the current block; otherwise, LIC is not applied when performing inter prediction on the current block. Here, the "optimal LIC mode" is not limited to a single LIC mode, and can also refer to a combination of an LIC mode and another inter mode(s) that can be applied together with the LIC mode.

In embodiments of the disclosure, if LIC is enabled for inter prediction of the current block, boundary detection on the current block is introduced to determine availability of the neighbouring reconstructed samples of the current block, and the LIC mode applied during trial encoding of the current block is determined according to availability of the neighbouring reconstructed samples of the current block. If only top neighbouring reconstructed samples or only left neighbouring reconstructed samples of the current block are available, only one or two modes among an LIC_TL mode, an LIC_T mode,

and an LIC_L mode are applied when performing trial encoding, instead of performing trial encoding by applying all the three LIC modes one by one, thereby eliminating data redundancy and reducing bits to be transmitted, and thus reducing overhead.

In an exemplary embodiment of the disclosure, the LIC mode applied during trial encoding of the current block is determined according to availability of the neighbouring reconstructed samples of the current block as follows. If both the top neighbouring reconstructed samples and the left neighbouring reconstructed samples of the current block are available, trial encoding is performed by applying the LIC_TL mode, the LIC_T mode, and the LIC_L mode.

In an exemplary embodiment of the disclosure, if only neighbouring reconstructed samples at one side of the current block are available, trial encoding with one of the LIC modes is skipped, that is, the LIC_T mode or the LIC_L mode is not applied during trial encoding.

In this embodiment, the LIC mode applied during trial encoding of the current block is determined according to availability of the neighbouring reconstructed samples of the current block as follows. If only the top neighbouring reconstructed samples of the current block are available, trial encoding is performed by applying the LIC_TL mode and the LIC_L mode. If only the left neighbouring reconstructed samples of the current block are available, trial encoding is performed by applying the LIC_TL mode and the LIC_T mode. In the LIC_T mode, only the top neighbouring reconstructed samples of the current block and top neighbouring reconstructed samples of a reference block are used to calculate an LIC model parameter.

If only the top neighbouring reconstructed samples of the current block are available, when performing trial encoding by applying the LIC_L mode, the left neighbouring reconstructed samples of the current block can be obtained through filling to calculate the LIC model parameter. During filling, a value of a reconstructed sample which is closest to the left of the current block among the top neighbouring reconstructed samples of the current block can be assigned to all the left neighbouring reconstructed samples of the current block, or a specified value (for example, an intermediate value in a value range of samples) can be assigned to all the left neighbouring reconstructed samples of the current block. If only the left reconstructed samples of the current block are available, when performing trial encoding by applying the LIC_T mode, the top neighbouring reconstructed samples of the current block can be obtained through filling to calculate the LIC model parameter. The manner for filling is similar to the above, and is not described again herein.

After performing trial encoding and calculating the rate-distortion cost according to the foregoing method, if LIC is determined to be applied during inter prediction of the current block according to the rate-distortion cost, the method further includes the following. An LIC usage flag (a CU-level flag) of the current block is set to be true and signalled into a bitstream. If an LIC mode with the minimum rate-distortion cost during trial encoding is the LIC_TL mode, an extended LIC flag of the current block is set to be false and signalled into the bitstream. If the LIC mode with the minimum rate-distortion cost during trial encoding is the LIC_T mode or the LIC_L mode, the extended LIC flag of the current block is set to be true and signalled into the bitstream.

In an example of this embodiment, when the LIC mode with the minimum rate-distortion cost is the LIC_T mode or the LIC_L mode, if both the top neighbouring reconstructed samples and the left neighbouring reconstructed samples of the current block are available, a mode index of the LIC mode with the minimum rate-distortion cost is encoded and signalled into the bitstream. However, if only the top neighbouring reconstructed samples or only the left neighbouring reconstructed samples of the current block are available, since the LIC_T mode or the LIC_L mode is not applied when performing trial encoding, it is unnecessary to encode the mode index. At the decoding end, the optimal LIC mode (i. e. the LIC mode with the minimum rate-distortion cost) can be determined according to availability of the neighbouring reconstructed samples of the current block. Specifically, if only the top neighbouring reconstructed samples of the current block are available, the optimal LIC mode is determined to be the LIC_T mode; if only the left neighbouring reconstructed samples of the current block are available, the optimal LIC mode is determined to be the LIC_L mode.

In another exemplary embodiment of the disclosure, if only neighbouring reconstructed samples at one side of the current block are available, trial encoding in the two LIC modes is skipped, that is, the LIC_T mode and the LIC_L mode are not applied during trial encoding.

In this embodiment, the LIC mode applied during trial encoding of the current block is determined according to availability of the neighbouring reconstructed samples of the current block as follows. If only the top neighbouring reconstructed samples or only the left neighbouring reconstructed samples of the current block are available, determine to apply the LIC_TL mode when performing trial encoding on the current block.

After performing trial encoding and calculating the rate-distortion cost according to the foregoing method, if LIC is determined to be applied during inter prediction of the current block according to the rate-distortion cost, the method further includes the following. An LIC usage flag of the current block is set to be true and signalled into a bitstream. If only the top neighbouring reconstructed samples or only the left neighbouring reconstructed samples of the current block are available, a mode index of the LIC mode and an extended LIC flag of the current block do not need to be encoded. That is, in this embodiment, if only neighbouring reconstructed samples at one side of the current block are available, only the LIC usage flag of the current block needs to be encoded, which can reduce codewords that need to be transmitted, and thus simplify the decoding process at the decoding end.

When both the top neighbouring reconstructed samples and the left neighbouring reconstructed samples of the current block are available, if the LIC mode with the minimum rate-distortion cost during trial encoding is the LIC_TL mode, the extended LIC flag of the current block is set to be false and signalled into the bitstream; if the LIC mode with the minimum rate-distortion cost is the LIC_T mode or the LIC_L mode, the extended LIC flag of the current block is set to be true and signalled into the bitstream, and a mode index of the LIC mode with the minimum rate-distortion cost is encoded and signalled into the bitstream.

According to the LIC method in the foregoing embodiments of the disclosure, if LIC is enabled for the current block, boundary detection on the current block is performed. If only neighbouring reconstructed samples at one side of the current block are available, trial encoding in one or more LIC modes is skipped, and as such, calculations can be simplified. In addition, encoding of the LIC-related syntax element of the current block can also be changed, for example, encoding of the mode index of the LIC mode is skipped, or encoding of the mode index and the extended LIC flag is skipped, which can save encoding time and reduce overhead, thereby improving encoding efficiency.

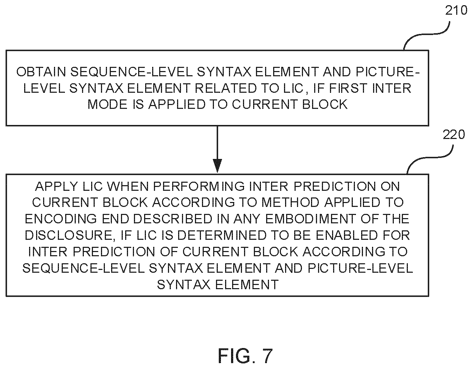

An embodiment of the disclosure further provides a video encoding method. As illustrated in FIG. 7, the method includes the following.

Step 210, if a first inter mode is applied to a current block, a sequence-level syntax element and a picture-level syntax element related to LIC are obtained.

In this step, at an encoding end, prediction modes can be traversed. If the first inter mode is applied to the current block, a sequence-level LIC enable flag and a picture-level LIC usage flag are obtained. The sequence-level LIC enable flag indicates whether LIC is enabled for a current encoder, and the picture-level LIC usage flag indicates whether LIC is enabled for a current picture.

Step 220, if LIC is determined to be enabled for inter prediction of the current block according to the sequence-level syntax element and the picture-level syntax element, LIC is applied when performing inter prediction on the current block according to the LIC method applied to the encoding end described in any embodiment of the disclosure.

In an example, if the sequence-level LIC enable flag is true (indicates that LIC is enabled) and the picture-level LIC usage flag is true (indicates that LIC is applied), then it can be determined that LIC is enabled for inter prediction of the current block. If at least one of the two flags is false, it is determined that LIC is disabled for inter prediction of the current block.

In the disclosure, a picture-level bit indicating to enable LIC is referred to as an LIC usage flag, and a CU-level flag indicating to enable LIC is referred to as an LIC usage flag in order for differentiation between the two.

In the video encoding method in embodiments, the LIC method applied to the encoding end in any embodiment of the disclosure is adopted to perform boundary detection on the current block, so as to determine availability of the neighbouring reconstructed samples of the current block. If only neighbouring reconstructed samples at one side of the current block are available, trial encoding in at least one of an LIC_T mode or an LIC_L mode is skipped, and encoding of some LIC-related syntax elements (such as flag and index) is omitted, which can save encoding time and reduce bit overhead, thereby improving encoding efficiency.

In some embodiments, in order to apply LIC, a prediction-mode flag needs to be parsed as a common inter prediction mode, which does not include a merge mode. In an exemplary embodiment of the disclosure, application of the LIC_T mode and the LIC_L mode is extended to the merge mode, and a syntax element is introduced into the merge mode to indicate the LIC_T mode or the LIC_L mode. In an example, the LIC method in any embodiment of the disclosure is applied to a merge mode in a uni-directional reference mode, but is not applied together with a combined inter-intra prediction (CIIP) mode, a geometric partitioning mode (GPM), or an affine mode (Affine_merge) in the merge mode in the uni-directional reference mode, and can be applied together with a merge mode with motion vector difference (MMVD_Merge). In another example, the LIC method in any embodiment of the disclosure is applied to a merge mode in a bi-directional reference mode (in the bi-directional reference mode, LIC can be applied only to the merge mode), but is not applied together with a BDOF mode, a decoder-side motion vector derivation mode, or a bi-prediction with CU-level weights (BCW) mode in the merge mode in the bi-directional reference mode, and can be applied together with a regular merge mode (regular_Merge).

In an exemplary embodiment of the disclosure, during construction of a motion vector prediction (MVP) list in the merge mode, a mode index of the LIC mode and an LIC-related flag (such as an LIC usage flag) of the current block inherit those of a neighbouring block or a corresponding prediction block (the neighbouring block for inter prediction is a spatial neighbouring block, and the prediction block is obtained from a reference picture and is a temporal block). Alternatively, the LIC usage flag of the current block inherits those of the neighbouring block or the corresponding prediction block. However, only the LIC usage flag is inherited while the mode index of the LIC mode is not inherited, and a mode index of the LIC_TL mode is used as a default mode index. By inheriting the LIC usage flag, additional rate-distortion optimization (RDO) operation can be eliminated at the encoding end.

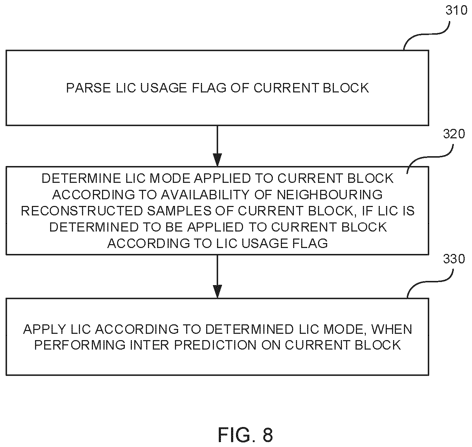

An embodiment of the disclosure further provides an LIC method. The method is applied to a decoding end. As illustrated in FIG. 8, the method includes the following.

Step 310, an LIC usage flag of a current block is parsed.

In this step, if the decoding end determines to apply an inter mode to the current block, a sequence-level LIC enable flag and a picture-level LIC usage flag are obtained. If the LIC enable flag is true (indicating that LIC is enabled for a current decoder) and the LIC usage flag is true (indicating that LIC is applied), the LIC usage flag of the current block is parsed to determine whether LIC is applied to the current block.

Step 320, if LIC is determined to be applied to the current block according to the LIC usage flag, an LIC mode applied to the current block is determined according to availability of neighbouring reconstructed samples of the current block.

In this step, at an encoding end, if only neighbouring reconstructed samples at one side of the current block are available, trial encoding in an LIC_T mode and/or an LIC_L mode is skipped, and a mode index of the LIC mode or an extended LIC flag does not need to be encoded. Therefore, at the decoding end, an LIC-related syntax element is parsed according to availability of the neighbouring reconstructed samples of the current block, so as to determine the LIC mode applied to the current block.

Step 330, LIC is applied according to the determined LIC mode, when performing inter prediction on the current block.

In this step, when performing inter prediction on the current block, the neighbouring reconstructed samples of the current block and neighbouring reconstructed samples of a reference block can be selected according to the determined LIC mode to calculate an LIC model parameter; and according to the LIC model parameter, linear transformation is performed on a prediction block obtained after motion compensation on the current block, so as to obtain a prediction block after LIC; and a reconstructed block is obtained by adding the prediction block after LIC and a decoded residual.

According to embodiments of the disclosure, during decoding, boundary detection is performed on the current block, and the LIC-related syntax element is parsed according to availability of the neighbouring reconstructed samples of the current block. If only neighbouring reconstructed samples at one side of the current block are available, the LIC mode applied to the current block can be determined through fewer syntax elements and a simpler parsing process, thereby saving bit overhead and improving encoding efficiency.

In an exemplary embodiment of the disclosure, corresponding to the embodiment in which trial encoding in the LIC_T mode or the LIC_L mode is skipped and encoding of the mode index is skipped at the encoding end if only neighbouring reconstructed samples at one side of the current block are available, the parsing process and semantics in this embodiment change accordingly. The LIC mode applied to the current block is determined according to availability of the neighbouring reconstructed samples of the current block as follows. An extended LIC flag of the current block is parsed. If the extended LIC flag is true and only top neighbouring reconstructed samples of the current block are available, determine that the LIC_L mode is applied to the current block. If the extended LIC flag is true and only left neighbouring reconstructed samples of the current block are available, determine that the LIC_T mode is applied to the current block.

At the encoding end, if only neighbouring reconstructed samples at one side of the current block are available, and the LIC_T mode or the LIC_L mode is determined to be applied, the LIC mode applied depends on the side of the current block at which the neighbouring reconstructed samples are available. Therefore, the LIC mode applied to the current block can be determined without using the mode index.

In this embodiment, the LIC mode applied to the current block is determined according to availability of the neighbouring reconstructed samples of the current block as follows. If the extended LIC flag is false, determine that an LIC_TL mode is applied to the current block. If the extended LIC flag is true and both the top neighbouring reconstructed samples and the left neighbouring reconstructed samples of the current block are available, an LIC mode index of the current block is parsed, and which one of the LIC_T mode or the LIC_L mode is applied to the current block is determined according to the LIC mode index.

In another exemplary embodiment of the disclosure, corresponding to the embodiment in which trial encoding in the LIC_T mode and the LIC_L mode is skipped and encoding of the extended LIC flag (indicating whether to use the LIC_T mode or the LIC_L mode) and the mode index is skipped at the encoding end if only neighbouring reconstructed samples at one side of the current block are available, the parsing process and semantics in this embodiment change accordingly.

In this embodiment, the LIC mode applied to the current block is determined according to availability of the neighbouring reconstructed samples of the current block as follows. If both the top neighbouring reconstructed samples and the left neighbouring reconstructed samples of the current block are available, the extended LIC flag of the current block is parsed. If the extended LIC flag is false, determine that the LIC_TL mode is applied to the current block. If the extended LIC flag is true, the LIC mode index of the current block is parsed, and determine, according to the LIC mode index, whether the LIC_T mode or the LIC_L mode is applied to the current block.

In this embodiment, the LIC mode applied the current block is determined according to availability of the neighbouring reconstructed samples of the current block as follows. If the top neighbouring reconstructed samples or the left neighbouring reconstructed samples of the current block are unavailable, the extended LIC flag does not need to be parsed and is false by default, and determine that the LIC_TL mode is applied to the current block. At the encoding end, the LIC_T mode and the LIC_L mode are disabled if only neighbouring reconstructed samples at one side of the current block are available. Therefore, at the decoding end, if it is determined that LIC is applied to the current block and only neighbouring reconstructed samples at one side are available, it can be directly determined that the LIC_TL mode is applied to the current block, and other syntax elements do not need to be parsed.

In an exemplary embodiment of the disclosure, LIC is applied according to the determined LIC mode as follows. If the LIC_T mode is applied to the current block, an LIC model parameter is calculated by using only the top neighbouring reconstructed samples of the current block and top neighbouring reconstructed samples of a reference block, and linear transformation is performed on a prediction block of the current block according to the LIC model parameter to obtain a prediction block after LIC. If the LIC_L mode is applied to the current block, the LIC model parameter is calculated by using only the left neighbouring reconstructed samples of the current block and left neighbouring reconstructed samples of the reference block, and linear transformation is performed on the prediction block of the current block according to the LIC model parameter to obtain the prediction block after LIC. If the LIC_TL mode is applied to the current block, the LIC model parameter is calculated according to the top neighbouring reconstructed samples and the left neighbouring reconstructed samples of the current block and the top neighbouring reconstructed samples and the left neighbouring reconstructed samples of the reference block, and linear transformation is performed on the prediction block of the current block according to the LIC model parameter to obtain the prediction block after LIC.

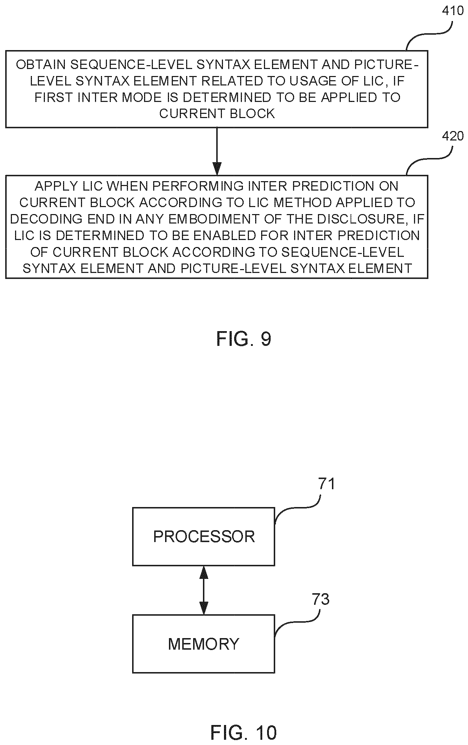

Embodiments of the disclosure further provide a video decoding method. As illustrated in FIG. 9, the method includes the following.

Step 410, if a first inter mode is determined to be applied to a current block, a sequence-level syntax element and a picture-level syntax element related to usage of LIC are obtained.

In this step, the parsed sequence-level and picture-level syntax elements can include a sequence-level LIC enable flag and a picture-level LIC usage flag.

Step 420, if LIC is determined to be enabled for inter prediction of the current block according to the sequence-level syntax element and the picture-level syntax element, LIC is applied when performing inter prediction on the current block according to the LIC method applied to the decoding end in any embodiment of the disclosure.

In this step, if both the LIC enable flag and the LIC usage flag are true, an LIC usage flag of the current block can be parsed according to the LIC method applied to the decoding end in any embodiment of the disclosure. If it is determined, according to the LIC usage flag, that LIC is applied to the current block, an LIC mode applied to the current block is determined according to availability of neighbouring reconstructed samples of the current block, and LIC is applied according to the determined LIC mode when performing inter prediction on the current block. In embodiments, during decoding, boundary detection is performed on the current block, and an LIC-related syntax element is parsed according to availability of the neighbouring reconstructed samples of the current block, which can save bit overhead and improve encoding efficiency.

In an exemplary embodiment of the disclosure, application of an LIC_T mode and an LIC_L mode is extended to a merge mode from AMVP, and a syntax element is introduced into the merge mode to indicate the LIC_T mode or the LIC_L mode. In an example, the LIC method in any embodiment of the disclosure is applied to a merge mode in a uni-directional reference mode, but is not applied together with a CIIP mode, GPM, or Affine_merge in the merge mode in the uni-directional reference mode, and can be applied together with MMVD_Merge. In another example, the LIC method in any embodiment of the disclosure is applied to a merge mode in a bi-directional reference mode (in the bi-directional reference mode, LIC can be applied only to the merge mode), but is not applied together with a BDOF mode, a decoder-side motion vector derivation mode, or a BCW mode in the merge mode in the bi-directional reference mode, and can be applied together with a regular merge mode (regular_Merge).

During construction of an MVP list in the merge mode, a mode index of the LIC mode and an LIC-related flag (such as an LIC usage flag) of the current block inherit those of a neighbouring block or a corresponding prediction block. Alternatively, the LIC usage flag of the current block inherits those of the neighbouring block or the corresponding prediction block. However, only the LIC usage flag is inherited while the mode index of the LIC mode is not inherited, and a mode index of the LIC_TL mode is used as a default mode index. By inheriting the LIC usage flag, additional RDO operation can be eliminated at at encoding end.

In an embodiment of the disclosure, with respect to the LIC_TL mode, a method for calculating the number of reconstructed samples selected is optimized, and the number of reconstructed samples selected is determined based on boundary detection on the current block.

The algorithm before optimization can be expressed as:

$$SampleNum = \min(cuWidth, cuHeight)$$

The optimized algorithm in embodiments can be represented as:

$$SampleNum = cuAbove \ \&\& \ cuLeft \ ? \ \min(cuWidth, cuHeight) : cuAbove \ ? \ cuWidth : cuHeight$$

In the foregoing formula, *SampleNum* represents the base number of the number of reconstructed samples selected, *cuWidth* and *cuHeight* represent the width and the height of the current block respectively, *cuAbove* means that the top neighbouring reconstructed samples of the current block are available, and *cuLeft* means that the left neighbouring reconstructed samples of the current block are available.

In the algorithm before optimization, no matter whether the current block is at the boundary, the number of reconstructed samples selected is calculated according to the minimum value between the width and the height of the current block. However, in the optimized algorithm, boundary detection is introduced. If a condition that both the top neighbouring reconstructed samples and the left neighbouring reconstructed samples of the current block are available is satisfied, the number of reconstructed samples selected is calculated according to the minimum value between the width and the height of the current block. If the condition is not satisfied, whether the top neighbouring reconstructed samples of the current block are available is determined. If the top neighbouring reconstructed samples of the current block are available, the number of reconstructed samples selected is calculated according to the width of the current block. If the top neighbouring reconstructed samples of the current block are unavailable, the number of reconstructed samples selected is calculated according to the height of the current block.

The optimized algorithm in embodiments can be combined with the LIC method in any embodiment of the disclosure, or can be applied to other LIC methods, for example, an LIC method in which only the LIC_TL mode is applied, and the like.

When the optimized algorithm in embodiments is combined with the LIC method applied to the encoding end in embodiments of the disclosure, trial encoding is performed on the current block by applying the determined LIC mode as follows. When performing trial encoding on the current block by applying the LIC_TL mode, if only the top neighbouring reconstructed samples of the current block are available, the number of reconstructed samples selected for calculating the LIC model parameter is determined according to the width of the current block; if only the left neighbouring reconstructed samples of the current block are available, the number of reconstructed samples selected for calculating the LIC model parameter is determined according to the height of the current block. In an example, if the number of reconstructed samples selected for calculating the LIC model parameter is determined according to the width of the current block, the number of reconstructed samples selected is the logarithm of the width to 2 as the base ($\log_2(\text{width})$), for example, if the width is 8, 3 reconstructed samples can be selected, but the disclosure is not limited thereto. The same applies to the case where the number of reconstructed samples selected for calculating the LIC model parameter is determined according to the height of the current block, which is not described again herein.

When the optimized algorithm in embodiments is combined with the LIC method applied to the decoding end in embodiments of the disclosure, the LIC model parameter is calculated according to the top neighbouring reconstructed samples and the left neighbouring reconstructed samples of the current block and the top neighbouring reconstructed samples and the left neighbouring reconstructed samples of the reference block as follows. If only the top neighbouring reconstructed samples of the current block are available, the number of reconstructed samples selected for calculating the LIC model parameter is determined according to the width of the current block. If only the left neighbouring reconstructed samples of the current block are available, the number of reconstructed samples selected for calculating the LIC model parameter is determined according to the height of the current block.

In this embodiment, if trial encoding is performed by applying the LIC_TL mode and the current block is at the boundary of a picture, the number of reconstructed samples selected for calculating an LIC model parameter is optimized, which can prevent a step size for reconstructed sample selection from being too large, thereby improving accuracy of model parameter calculation and improving encoding performance.

An embodiment of the disclosure provides a video encoding method and a video decoding method. CU-level boundary detection for the illumination compensation mode is introduced at both the encoding end and the decoding end. At the encoding end, if the current block is at the top boundary, trial encoding in the LIC_L mode is skipped; and if the current block is at the left boundary, trial encoding in the LIC_T mode is skipped. Accordingly, at the decoding end, when parsing the syntax element of the current block, determine whether the current block is at the boundary. If the current block is at the boundary, the last syntax element (mode index) does not need to be parsed; otherwise, all the LIC-related syntax elements of the current block need to be parsed.

In this embodiment, a current CU is taken as an example of the current block. The video encoding method in this embodiment includes the following.

Step one, an encoder traverses prediction modes. If an inter mode that can apply LIC is applied to a current CU, an LIC enable flag and a picture-level LIC usage flag are obtained. The LIC enable flag is a sequence-level flag, and indicates that LIC is enabled for the current encoder. If the LIC enable flag is true and the picture-level LIC usage flag is true, at the encoding end, the LIC prediction method is tried, and proceed to step two. If the LIC enable flag or the LIC usage flag is false, at the encoding end, the LIC prediction method will not be tried, and proceed to step three directly without performing step two.

Step two, the encoder obtains information of neighbouring reconstructed samples of the current CU. If both top neighbouring reconstructed samples and left neighbouring reconstructed reference samples of the current CU are available, a first round, a second round, and a third round of trial encoding are performed. If only the left neighbouring reconstructed samples of the current CU are available, the first round and the second round of trial encoding are performed. If only the top neighbouring reconstructed samples of the current CU are available, the first round and the third round of trial encoding are performed.

In the first round of trial encoding, reconstructed samples for calculating the LIC model parameter are selected by applying the LIC_TL mode. The process includes the following. At the encoding end, the top neighbouring reconstructed samples and the left neighbouring reconstructed samples of the current CU are selected, where the number of reconstructed samples selected is determined based on the minimum value among the width and the height of the current CU. In addition, top neighbouring reconstructed samples and left neighbouring reconstructed samples of a corresponding CU (i. e. reference CU) in a reference picture are selected. If the current CU is not at the boundary, both the top neighbouring reconstructed samples and the left neighbouring reconstructed samples of the current CU and those of the reference CU can be selected. If the current CU is at the boundary, only the top neighbouring reconstructed samples or only the left neighbouring reconstructed samples of the current CU and those of the reference CU can be selected.

After the reconstructed samples are selected, the reconstructed samples obtained are modeled through the linear model calculation method described above, to calculate a scaling factor a and an offset parameter b. Then, linear transformation is performed on a motion-compensated prediction block by using the scaling factor a and the offset parameter b, to obtain a prediction block after LIC of the current CU. A difference between the prediction block and original samples corresponding to the current CU is calculated to obtain a residual of the current CU. A rate-distortion cost value is calculated through operations such as transform and quantization, and is denoted as *cost1.*

In the second round of trial encoding, reconstructed samples for calculating the LIC model parameter are selected by applying the LIC_T mode. The process includes the following. At the encoding end, only the top neighbouring reconstructed samples of the current CU are selected, and only the top neighbouring reconstructed samples of the corresponding CU in the reference picture are selected. The processing after the reconstructed samples are selected is the same as that in the first round, and a rate-distortion cost value is calculated and denoted as *cost2.*

In the third round of trial encoding, reconstructed samples for calculating the LIC model parameter are selected by applying the LIC_L mode. The process includes the following. At the encoding end, only the left neighbouring reconstructed samples of the current CU are selected, and only the left neighbouring reconstructed samples of the corresponding CU in the reference picture are selected. The processing after the reconstructed samples are selected is the same as that in the first round, and a rate-distortion cost value is calculated and denoted as *cost3.*

*cost1, cost2,* and *cost*3 are compared, and the minimum rate-distortion cost value is denoted as *costLic.* In addition, information of a current LIC mode is stored, which includes a mode index of the LIC mode. A mode index of the LIC_TL mode corresponding to *cost1* is 0, a mode index of the LIC_T mode corresponding to *cost2* is 1, and a mode index of the LIC_L mode corresponding to *cost3* is 2.

Step three, at the encoding end, other inter prediction modes are traversed, rate-distortion cost values corresponding to these prediction modes are calculated, and a prediction mode corresponding to the minimum rate-distortion cost value is determined as the optimal prediction mode for the current CU, which includes several cases.

In a first case, if LIC is enabled for the current CU and *costLic* is the minimum value compared with the rate-distortion cost values of other prediction modes, it is determined that the LIC is applied to the current CU, and a CU-level LIC usage flag of the current CU is set to be true and signalled into a bitstream.

When the current CU is not at the boundary, if a mode index of an LIC mode corresponding to *costLic* is greater than 0 (the mode index of the LIC_T mode and the mode index of the LIC_L mode are greater than 0), an extended LIC flag is set to be true and signalled into the bitstream, and the mode index is encoded (for example, by means of equiprobable encoding, etc.) and signalled into the bitstream; if the mode index of the LIC mode corresponding to *costLic* is equal to 0 (the mode index of the LIC_TL mode is equal to 0), the extended LIC flag is set to be false and signalled into the bitstream.

When the current CU is at the boundary, if the mode index of the LIC mode corresponding to *costLic* is greater than 0, the extended LIC flag is set to be true and signalled into the bitstream; if the mode index of the LIC mode corresponding to *costLic* is equal to 0, the extended LIC flag is set to be false and signalled into the bitstream. The mode index does not need to be encoded in this case.

In a second case, if LIC is enabled for the current CU but *costLic* is not the minimum value compared with the rate-distortion costs of other prediction modes, LIC is not applied to the current CU, and the CU-level LIC usage flag the current CU is set to be false and signalled into the bitstream.

In a third case, if the illumination compensation technology is disabled for the current CU, information of the optimal prediction mode among other non-illumination compensation technologies is signalled into the bitstream, which is not described in detail herein.

In this step, if the mode index of the LIC mode corresponding to *costLic* is greater than 0, *costLic* may correspond to the LIC_T mode having the mode index of 1, or may correspond to the LIC_L mode having the mode index of 2. When encoding and signallling the mode index into the bitstream, 1 can be subtracted from the mode index. In this way, if the mode index is 1, the encoded mode index is 0; and if the mode index is 2, the encoded mode index is 1. At the decoding end, if the encoded mode index is parsed as 0, the LIC_T mode is determined to be applied; and if the encoded mode index is parsed as 1, the LIC_L mode is determined to be applied.

Step four, after traversing all the CUs, the encoder outputs the bitstream after operations such as entropy coding.

In the disclosure, the LIC_TL mode can also be referred to as a top-and-left LIC mode, the LIC_T mode can also be referred to as a top-only LIC mode, and the LIC_T mode can also be referred to as a left-only LIC mode.

The video decoding method in this embodiment includes the following.

Step one, at the decoding end, a CU-level type flag is parsed. If the CU-level type flag indicates an inter mode, an LIC enable flag is obtained, where the LIC enable flag is a sequence-level flag, and indicates that LIC is enabled for a current decoder. If the LIC enable flag is true, a picture-level LIC usage flag needs to be parsed when decoding each picture.

If both the sequence-level LIC enable flag and the picture-level LIC usage flag are true, an LIC usage flag (CU-level flag) of a current CU is parsed.

If the LIC usage flag *lic_flag* of the current CU is true, an extended LIC flag *lic_ext* is parsed.

If *lic_ext* is true, and both top neighbouring reconstructed samples and left neighbouring reconstructed samples of the current CU are available, a mode index *lic_idx* (encoded mode index) of an LIC mode is parsed. If *lic_idx* is 1, the LIC_L mode is determined to be applied to the current CU. If *lic_idx* is 0, the LIC_T mode is determined to be applied to the current CU.

If *lic_ext* is true, and only the top neighbouring reconstructed samples or only the left neighbouring reconstructed samples of the current CU are available, the mode index does not need to be parsed. If only the top neighbouring reconstructed samples of the current CU are available, it is determined that the LIC_T mode is applied to the current CU. If only the left neighbouring reconstructed samples of the current CU are available, it is determined that the LIC_L mode is applied to the current CU.

If *lic_ext* is false, it is determined that the LIC_TL mode is applied to the current CU.

Then, proceed to step two.

If the LIC usage flag *lic_flag* of the current CU is false, proceed to step three.

If one of the sequence-level LIC enable flag or the picture-level LIC usage flag is false, in the current decoding process, the LIC usage flag of the current CU does not need to be parsed, and the CU-level LIC usage flag is false by default, and then proceed to step three.

Step two, at the decoding end, an LIC mode applied is determined according to the index obtained by parsing in the previous step, and neighbouring reconstructed samples of the current CU are selected according to the determined LIC mode, where the number of reconstructed samples selected depends on the width or height of the current CU. In addition, neighbouring reconstructed samples of a corresponding CU in a reference picture are selected. The reconstructed samples selected are modeled through a linear model calculation method to calculate a scaling factor a and an offset parameter b, and linear transformation is performed on a motion-compensated prediction block, that is, scaled a times and compensated by *b*, so as to obtain a prediction block after LIC of the current CU.

Step three, information such as usage flag or index of other inter prediction modes is parsed, and a final prediction block of the current CU is obtained according to the information parsed.

Step four, a bitstream is parsed to obtain residual information, time-domain residual information (also referred to as a decoded residual or a reconstructed residual) is obtained through inverse quantization and inverse transform, and the final prediction block and the time-domain residual information are added to obtain a reconstructed sample block, i. e. a reconstructed block, of the current block.

Step five, a reconstructed picture is obtained after all the reconstructed sample blocks are subject to technologies such as in-loop filtering. The reconstructed picture can be output as a video or can be used as a reference for decoding a subsequent picture.

In this embodiment or other embodiments, if the LIC-related flag is 1, it indicates that the flag is true; and if the LIC-related flag is 0, it indicates that the flag is false, but the disclosure is not limited thereto.

In this embodiment, limitation can be set for application of LIC at a CU-level. If the product of the width and the height of the current CU is less than 32, LIC is disabled.

The CU-level syntax table in this embodiment is as follows:

| | |
|---|---|
| if(sps_lic_enable_flag && ph_lic_enable_flag){ | |
| lic_flag; | ae(v) |
| if(lic_flag){ // current block uses lic | |
| lic_ext; | ae(v) |
| if(lic_ext !=0){ // not use both top and left | |

(continued)

| | |
|---|---|
| if(cuAbove && cuLeft){ | |
| lic_index; // 0: top; 1: left | ae(v) |
| } else { | |
| lic_index = cuLeft ? 0 : 1; | |
| } | |
| } | |
| } | |
| } | |

*sps_lic_enable_flag* is the sequence-level LIC enable flag, *ph_lic_enable_flag* is the picture-level LIC usage flag, *lic_flag* is an LIC usage flag of the current CU, *lic_ext* is the extended LIC flag of the current CU, and *lic_index* is an encoded mode index of the current CU. According to *lic_ext + lic_index,* a mode index of the LIC mode applied to the current CU before encoding can be obtained.

JVET has established a group for research on a coding model beyond H.266NVC, and the model, i. e., platform test software, is named enhanced compression model (ECM). In the ECM, newer and more efficient compression algorithms are introduced on the basis of version 10.0 of VVC test model (VTM10.0), and lots of intra prediction technologies and inter prediction technologies are applied. After the embodiment is applied to the latest ECM 4.0, a test is performed under a common test condition for random access (RA). Taking sequence class D as an example, the test results are as follows:

| | Random Access Main10 | | | | |
|---|---|---|---|---|---|
| | Over ECM4.0 | | | | |
| | Y | U | V | EncT | DecT |
| Class D | -0.02% | 0.08% | -0.17% | 106% | 98% |

As can be seen from test data for sequence class D, compared with the foregoing second embodiment, this embodiment has improvement in chroma component. In view of the encoding end, encoding time is effectively reduced by skipping trial encoding when at the boundary, and the encoding time is reduced by 2%~3% on average. In addition, in this embodiment, redundant information in the bitstream is eliminated.

Another embodiment of the disclosure provides a video encoding method and a video decoding method. Likewise, CU-level boundary detection for the illumination compensation mode is introduced at both the encoding end and the decoding end. At the encoding end, if the current block is at any boundary, only the original illumination compensation mode, that is, the LIC_TL mode, is enabled, while trial encoding in the LIC_L mode and the LIC_T mode is disabled. At the decoding end, when parsing an LIC-related syntax element of the current block, whether the current block is at the boundary is determined. If the current block is at any boundary, only a 1st syntax element, i. e. the LIC usage flag, needs to be parsed. If the LIC usage flag is true, the LIC_TL mode can be determined to be applied; and if the LIC usage flag is false, it indicates that LIC is not applied when performing inter prediction on the current block. In this embodiment, a current CU is taken as an example of the current block.

The video encoding method in this embodiment includes the following.

Step one, an encoder traverses prediction modes. If an inter mode that can apply LIC is applied to a current CU, an LIC enable flag and a picture-level LIC usage flag are obtained. The LIC enable flag is a sequence-level flag, and indicates that LIC is enabled for the current encoder. If the sequence-level LIC enable flag is true and the picture-level LIC usage flag is true, at the encoding end, the LIC prediction method is tried, and proceed to step two. If at least one of the sequence-level LIC enable flag or the picture-level LIC usage flag is false, at the encoding end, the LIC prediction method will not be tried, and proceed to step three directly without performing step two.

Step two, the encoder obtains information of neighbouring reconstructed samples of the current CU. If both top neighbouring reconstructed samples and left neighbouring reconstructed reference samples of the current CU are available, a first round, a second round, and a third round of trial encoding are performed. If only the left neighbouring reconstructed samples or only the top neighbouring reconstructed samples of the current CU are available, only the first round of the trial encoding is performed.

In the first round of trial encoding, reconstructed samples for calculating the LIC model parameter are selected by applying the LIC_TL mode. The process thereof includes the following. At the encoding end, the top neighbouring reconstructed samples and the left neighbouring reconstructed samples of the current CU are selected, where the number of reconstructed samples selected is determined based on the minimum value among the width and the height of the current CU. In addition, top neighbouring reconstructed samples and left neighbouring reconstructed samples of a corresponding CU (i. e. reference CU) in a reference picture are selected. If the current CU is not at the boundary, both the top neighbouring reconstructed samples and the left neighbouring reconstructed samples of the current CU and those of the reference CU can be selected. If the current CU is at the boundary, only the top neighbouring reconstructed samples or only the left neighbouring reconstructed samples of the current CU and those of the reference CU can be selected.

After the reconstructed samples are selected, the reconstructed samples obtained are modeled through the linear model calculation method described above, to calculate a scaling factor a and an offset parameter b. Then, linear transformation is performed on a motion-compensated prediction block by using the scaling factor a and the offset parameter b, to obtain a prediction block after LIC of the current CU. A difference between the prediction block and original samples corresponding to the current CU is calculated to obtain a residual of the current CU. A rate-distortion cost value is calculated through operations such as transform and quantization, and is denoted as *cost1.*

In the second round of trial encoding, reconstructed samples for calculating the LIC model parameter are selected by applying the LIC_T mode. The process includes the following. At the encoding end, only the top neighbouring reconstructed samples of the current CU are selected, and only the top neighbouring reconstructed samples of the corresponding CU in the reference picture are selected. The processing after the reconstructed samples are selected is the same as that in the first round, and a rate-distortion cost value is calculated and denoted as *cost2.*

In the third round of trial encoding, reconstructed samples for calculating the LIC model parameter are selected by applying the LIC_L mode. The process includes the following. At the encoding end, only the left neighbouring reconstructed samples of the current CU are selected, and only the left neighbouring reconstructed samples of the corresponding CU in the reference picture are selected. The processing after the reconstructed samples are selected is the same as that in the first round, and a rate-distortion cost value is calculated and denoted as *cost3.*

*cost1, cost2,* and *cost*3 are compared, and the minimum rate-distortion cost value is denoted as *costLic.* In addition, information of a current LIC mode is stored, which includes a mode index of the LIC mode. A mode index of the LIC_TL mode corresponding to *cost1* is 0, a mode index of the LIC_T mode corresponding to *cost2* is 1, and a mode index of the LIC_L mode corresponding to *cost3* is 2.

Step three, at the encoding end, other inter prediction modes are traversed, rate-distortion cost values corresponding to these prediction modes are calculated, and a prediction mode corresponding to the minimum rate-distortion cost value is determined as the optimal prediction mode for the current CU, which includes several cases.

In a first case, if LIC is enabled for the current CU and *costLic* is the minimum value compared with the rate-distortion cost values of other prediction modes, it is determined that the LIC is applied to the current CU, and a CU-level LIC usage flag of the current CU is set to be true and signalled into a bitstream.

When the current CU is not at the boundary, if a mode index of an LIC mode corresponding to *costLic* is greater than 0, an extended LIC flag is set to be true and signalled into the bitstream, and the mode index is encoded (for example, by means of equiprobable encoding, etc.) and signalled into the bitstream; if the mode index of the LIC mode corresponding to *costLic* is equal to 0, the extended LIC flag is set to be false and signalled into the bitstream.

If the current CU is at the boundary, the LIC_TL mode is applied by default, and other syntax elements do not need to be signalled into the bitstream.

In a second case, if LIC is enabled for the current CU but *costLic* is not the minimum value compared with the rate-distortion costs of other prediction modes, LIC is not applied to the current CU, and the CU-level LIC usage flag the current CU is set to be false and signalled into the bitstream.

In a third case, if LIC is disabled for the current CU, information of the optimal non-LIC prediction mode is signalled into the bitstream, which is not described in detail herein.

Step four, after traversing all the CUs, the encoder outputs the bitstream after implementing technologies such as entropy coding.

The video decoding method in this embodiment includes the following.

Step one, at the decoding end, a CU-level type flag is parsed. If the CU-level type flag indicates an inter mode, an LIC enable flag is obtained, where the LIC enable flag is a sequence-level flag, and indicates that LIC is enabled for a current decoder. If the LIC enable flag is true, a picture-level LIC usage flag needs to be parsed when decoding each picture.

If both the sequence-level LIC enable flag and the picture-level LIC usage flag are true, an LIC usage flag of a current CU is parsed.

If the LIC usage flag *lic_flag* of the current CU is true, and both top neighbouring reconstructed samples and left neighbouring reconstructed samples of the current CU are available, an extended LIC flag *lic_ext* of the current CU is parsed.

If *lic_ext* is true, a mode index *lic_idx* (encoded mode index) of an LIC mode is parsed. If *lic_idx* is 1, the LIC_L mode is determined to be applied to the current CU. If *lic_idx* is 0, the LIC_T mode is determined to be applied to the current CU.

If *lic_ext* is false, it is determined that the LIC_TL mode is applied to the current CU.

If *lic_flag* of the current CU is true, and only the top neighbouring reconstructed samples or only the left neighbouring reconstructed samples of the current CU are available, it is determined that the LIC_TL mode is applied to the current CU.

Then, proceed to step two.

If the LIC usage flag of the current CU is false, proceed to step three.

If at least one of the sequence-level LIC enable flag or the picture-level LIC usage flag is false, in the current decoding process, the CU-level LIC usage flag does not need to be parsed, and the CU-level LIC usage flag is false by default, and then step three is performed.

Step two, the decoder determines, according to the index obtained by parsing in the previous step, an LIC mode applied; and selects neighbouring reconstructed reference samples of the current CU according to the determined LIC mode, where the number of reconstructed samples selected depends on the width or height of the current CU. In addition, neighbouring reconstructed samples of a corresponding CU in a reference picture are selected. The reconstructed samples selected are modeled through a linear model calculation method to calculate a scaling factor a and an offset parameter b, and linear transformation is performed on a motion-compensated prediction block, that is, scaled a times and compensated by *b*, so as to obtain a prediction block after LIC of the current CU.

Step three, information such as usage flag or index of other inter prediction modes is parsed, and a final prediction block of the current CU is obtained according to the information parsed.

Step four, a bitstream is parsed to obtain residual information, time-domain residual information is obtained through inverse quantization and inverse transform, and the final prediction block and the time-domain residual information are added to obtain a reconstructed sample block of the current CU.

Step five, a reconstructed picture is obtained after all the reconstructed sample blocks are subject to technologies such as in-loop filtering. The reconstructed picture can be output as a video or can be used as a reference for subsequent decoding.

In this embodiment, limitation can be set for application of LIC at a CU-level. If the product of the width and the height of the current CU is less than 32, LIC is disabled.

The CU-level syntax table in this embodiment is as follows:

| | |
|---|---|
| if(sps_lic_enable_flag && ph_lic_enable_flag){ | |
| lic_flag; | ae(v) |
| if(lic_flag && cuAbove && cuLeft){ // current block uses lic | |
| lic_ext; | ae(v) |
| if(lic_ext !=0){ // not use both top and left | |
| lic_index; // 0: top; 1: left | ae(v) |
| } | |
| } else{ | |
| lic_ext = 0 | |
| lic_index = 0 | |
| } | |
| } | |

*sps_lic_enable_flag* is the sequence-level LIC enable flag, *ph_lic_enable_flag* is the picture-level LIC usage flag, *lic_flag* is the LIC usage flag of the current CU, *lic_ext* is the extended LIC flag of the current CU, and *lic_index* is an encoded mode index of the current CU. According to *lic_ext + lic_index,* a mode index of the LIC mode applied to the current CU before encoding can be obtained.

An embodiment of the disclosure further provides an LIC apparatus. As illustrated in FIG. 10, the apparatus includes a processor 71 and a memory 73 configured to store computer programs. When executing the computer programs, the processor 71 can implement the LIC method according to any embodiment of the disclosure.

An embodiment of the disclosure further provides a video decoding apparatus. Referring to FIG. 10, the video decoding apparatus includes a processor and a memory configured to store computer programs. When executing the computer programs, the processor can implement the video decoding method according to any embodiment of the disclosure.

An embodiment of the disclosure further provides a video encoding apparatus. Referring to FIG. 10, the video encoding apparatus includes a processor and a memory configured to store computer programs. When executing the computer programs, the processor can implement the video encoding method according to any embodiment of the disclosure.

The processor in embodiments of the disclosure can be a general-purpose processor, including a central processing unit ("CPU" for short), a network processor ("NP" for short), a microprocessor, or the like, and can also be other conventional processors or the like. The processor can also be a digital signal processor (DSP), an application-specific integrated circuit (ASIC), a field programmable gate array (FPGA), discrete logic or other programmable logic devices, discrete gates or transistor logic devices, discrete hardware components, or can be a combination of the above devices. That is, the processor in the foregoing embodiments can be any processing component or combination of components for implementing the methods, steps, and logical blocks disclosed in embodiments of the disclosure. If embodiments of the disclosure are implemented partially in software, the instructions for the software can be stored in a suitable non-transitory computer-readable storage medium, and can be executed by one or more processors in hardware to implement the methods of embodiments of the disclosure.

An embodiment of the disclosure further provides a video coding system. The system includes the video encoding apparatus described in any embodiment of the disclosure and the video decoding apparatus described in any embodiment of the disclosure.

An embodiment of the disclosure further provides a non-transitory computer-readable storage medium. The computer-readable storage medium is configured to store computer programs which, when executed by a processor, are operable to implement the LIC method described in any embodiment of the disclosure, or implement the video decoding method described in any embodiment of the disclosure, or implement the video encoding method described in any embodiment of the disclosure.

An embodiment of the disclosure further provides a bitstream. The bitstream is generated according to the video encoding method described in any embodiment of the disclosure.

In one or more of the foregoing exemplary embodiments, the functions described may be implemented by hardware, software, firmware, or any combination thereof. If implemented by software, the functions may be stored in or transmitted over a computer-readable medium as one or more instructions or codes and executed by a hardware-based processing unit. The computer-readable medium may include a computer-readable storage medium corresponding to a tangible medium such as a data storage medium, or a communication medium including any medium for transmitting computer programs from one place to another, for example, based on a communication protocol. In this manner, the computer-readable medium may usually correspond to a non-transitory tangible computer-readable storage medium or a communication medium such as a signal or a carrier. The data storage medium may be any available medium that can be accessed by one or more computers or one or more processors to retrieve instructions, codes, and/or data structures for implementation of the technology described in the disclosure. A computer program product may include a computer-readable medium.

By way of example rather than limitation, such computer-readable storage medium may include a random access memory (RAM), a read-only memory (ROM), an electrically erasable programmable ROM (EEPROM), a compact disc ROM (CD-ROM) or other optical disc storage devices, magnetic disc storage devices or other magnetic storage devices, flash memory, or any other medium that can be used to store desired program codes in the form of instructions or data structures and can be accessed by a computer. In addition, any connection may be termed a computer-readable medium. For example, if instructions are transmitted from a website, server, or other remote sources by using a coaxial cable, an optical fiber cable, a twisted pair, a digital subscriber line (DSL), or a wireless technology such as infrared, radio, and microwave, the coaxial cable, the optical fiber cable, the twisted pair, the DSL, or the wireless technology such as infrared, radio, and microwave are included in the definition of a medium. However, it may be appreciated, that the computer-readable storage medium and the data storage medium do not include a connection, a carrier, a signal, or other transitory media, but are intended for a non-transitory tangible storage medium. The magnetic disc and the optical disc used herein include a CD, a laser disc, an optical disc, a digital versatile disc (DVD), a floppy disc or a Blu-Ray disc, etc. where the magnetic disc usually reproduces data magnetically, while the optical disc reproduces data optically with lasers. Combinations of the above shall also be included within the scope of the computer-readable medium.

Instructions may be executed by one or more processors, such as one or more DSPs, general-purpose microprocessors, ASICs, FPGAs, or other equivalent integrated or discrete logic circuits. Thus, the term "processor" used herein may refer to any of the foregoing structure or any other structure suitable for implementation of the technology described herein. In addition, in some aspects, the functionality described herein may be provided within dedicated hardware and/or software modules configured for coding, or incorporated in an integrated encoder-decoder. In addition, the technology may be embodied completely in one or more circuits or logic elements.

The technical solutions of embodiments of the disclosure can be implemented in a wide variety of apparatuses or devices, including a wireless mobile phone, an integrated circuit (IC), or a group of ICs (e. g., a chipset). Various components, modules, or units are described in embodiments of the disclosure are configured to implement functions of devices based on the described technology, but do not necessarily mean that these functions shall be implemented by different hardware units respectively. Instead, as described above, various units may be combined in a hardware unit of an encoder-decoder or implemented by a collection of interoperative hardware units (including one or more processors described above) in conjunction with suitable software and/or firmware.

**Claims**

1. A local illumination compensation (LIC) method, applied to a decoding end and comprising:

   parsing an LIC usage flag of a current block;
   determining an LIC mode applied to the current block according to availability of neighbouring reconstructed samples of the current block in response to determining, according to the LIC usage flag, that LIC is applied to the current block; and
   applying LIC according to the determined LIC mode, when performing inter prediction on the current block.

2. The method of claim 1, wherein determining the LIC mode applied to the current block according to availability of the neighbouring reconstructed samples of the current block comprises:

   parsing an extended LIC flag of the current block; and
   when the extended LIC flag is true and only top neighbouring reconstructed samples of the current block are available, determining that an LIC_left (LIC_L) mode is applied to the current block, wherein in the LIC_L mode, only left neighbouring reconstructed samples of the current block and left neighbouring reconstructed samples of a reference block are used to calculate an LIC model parameter;
   when the extended LIC flag is true and only left neighbouring reconstructed samples of the current block are available, determining that an LIC_top (LIC_T) mode is applied to the current block, wherein in the LIC_T mode, only top neighbouring reconstructed samples of the current block and top neighbouring reconstructed samples of the reference block are used to calculate the LIC model parameter.

3. The method of claim 2, wherein determining the LIC mode applied to the current block according to availability of the neighbouring reconstructed samples of the current block further comprises:

   when the extended LIC flag is false, determining that an LIC_top-and-left (LIC_TL) mode is applied to the current block, wherein in the LIC_TL mode, the LIC model parameter is calculated according to the top neighbouring reconstructed samples and the left neighbouring reconstructed samples of the current block and the top neighbouring reconstructed samples and the left neighbouring reconstructed samples of the reference block;
   when the extended LIC flag is true and both the top neighbouring reconstructed samples and the left neighbouring reconstructed samples of the current block are available, parsing an LIC mode index of the current block and determining, according to the LIC mode index, which one of the LIC_T mode or the LIC_L mode is applied to the current block.

4. The method of claim 1, wherein determining the LIC mode applied to the current block according to availability of the neighbouring reconstructed samples of the current block comprises:

   parsing an extended LIC flag of the current block when both top neighbouring reconstructed samples and left neighbouring reconstructed samples of the current block are available; and
   when the extended LIC flag is false, determining that an LIC_TL mode is applied to the current block;
   when the extended LIC flag is true, parsing an LIC mode index of the current block and determining, according to the LIC mode index, which one of an LIC_T mode or an LIC_L mode is applied to the current block.

5. The method of claim 4, wherein determining the LIC mode applied to the current block according to availability of the neighbouring reconstructed samples of the current block further comprises:
   when both the top neighbouring reconstructed samples and the left neighbouring reconstructed samples of the current block being available is not satisfied, skipping parsing the extended LIC flag and the extended LIC flag is false by default, and determining that the LIC_TL mode is applied to the current block.

6. The method of claim 1, wherein applying LIC according to the determined LIC mode comprises:

when an LIC_T mode is applied to the current block, calculating an LIC model parameter by using only top neighbouring reconstructed samples of the current block and top neighbouring reconstructed samples of a reference block, and performing linear transformation on a prediction block of the current block according to the LIC model parameter to obtain a prediction block after LIC;

when an LIC_L mode is applied to the current block, calculating the LIC model parameter by using only left neighbouring reconstructed samples of the current block and left neighbouring reconstructed samples of the reference block, and performing linear transformation on the prediction block of the current block according to the LIC model parameter to obtain the prediction block after LIC;

when an LIC_TL mode is applied to the current block, calculating the LIC model parameter according to the top neighbouring reconstructed samples and the left neighbouring reconstructed samples of the current block and the top neighbouring reconstructed samples and the left neighbouring reconstructed samples of the reference block, and performing linear transformation on the prediction block of the current block according to the LIC model parameter to obtain the prediction block after LIC.

7. The method of claim 6, wherein calculating the LIC model parameter according to the top neighbouring reconstructed samples and the left neighbouring reconstructed samples of the current block and the top neighbouring reconstructed samples and the left neighbouring reconstructed samples of the reference block comprises:

when only the top neighbouring reconstructed samples of the current block are available, determining, according to a width of the current block, the number of reconstructed samples selected for calculating the LIC model parameter;

when only the left neighbouring reconstructed samples of the current block are available, determining, according to a height of the current block, the number of reconstructed samples selected for calculating the LIC model parameter.

8. A video decoding method, comprising:

in response to determining that a first inter mode is applied to a current block, obtaining a sequence-level syntax element and a picture-level syntax element related to usage of local illumination compensation (LIC); and

applying LIC when performing inter prediction on the current block according to the method of any of claims 1 to 7, in response to determining, according to the sequence-level syntax element and the picture-level syntax element, that LIC is enabled for inter prediction of the current block.

9. The method of claim 8, wherein the first inter mode comprises at least one of:

a merge mode in a uni-directional reference mode, but not applied together with a combined inter-intra prediction (CIIP) mode, a geometric partitioning mode (GPM), or an affine mode in the merge mode in the uni-directional reference mode; or

a merge mode in a bi-directional reference mode, but not applied together with a bi-directional optical flow (BDOF) mode, a decoder-side motion vector derivation mode, or a bi-prediction with coding unit-level weights (BCW) mode in the merge mode in the bi-directional reference mode.

10. The method of claim 9, further comprising:
during construction of a motion vector prediction (MVP) list in the merge mode, a mode index of an LIC mode and an LIC usage flag of the current block inherit those of a neighbouring block or a corresponding prediction block, or the LIC usage flag of the current block inherits that of the neighbouring block or the corresponding prediction block, and a mode index of an LIC_top-and-left (LIC_TL) mode is used as a default mode index.

11. A local illumination compensation (LIC) method, applied to an encoding end and comprising:

when LIC is enabled for inter prediction of a current block, determining an LIC mode applied during trial encoding of the current block according to availability of neighbouring reconstructed samples of the current block; and

performing trial encoding on the current block by applying the determined LIC mode, and calculating a rate-distortion cost; and determining, according to the rate-distortion cost, whether to apply LIC when performing inter prediction on the current block.

12. The method of claim 11, wherein determining the LIC mode applied during trial encoding of the current block according to availability of the neighbouring reconstructed samples of the current block comprises:
when both top neighbouring reconstructed samples and left neighbouring reconstructed samples of the current block are available, performing trial encoding by applying an LIC_top-and-left (LIC_TL) mode, an LIC_top (LIC_T) mode, and an LIC_left (LIC_L) mode.

13. The method of claim 11 or 12, wherein determining the LIC mode applied during trial encoding of the current block according to availability of the neighbouring reconstructed samples of the current block comprises:

when only top neighbouring reconstructed samples of the current block are available, performing trial encoding by applying an LIC_TL mode and an LIC_L mode, wherein in the LIC_TL mode, an LIC model parameter is calculated according to top neighbouring reconstructed samples and left neighbouring reconstructed samples of the current block and top neighbouring reconstructed samples and left neighbouring reconstructed samples of a reference block; in the LIC_L mode, only the left neighbouring reconstructed samples of the current block and the left neighbouring reconstructed samples of the reference block are used to calculate the LIC model parameter; when only the left neighbouring reconstructed samples of the current block are available, performing trial encoding by applying the LIC_TL mode and an LIC_T mode, wherein in the LIC_T mode, only the top neighbouring reconstructed samples of the current block and the top neighbouring reconstructed samples of the reference block are used to calculate the LIC model parameter.

14. The method of claim 13, wherein after determining, according to the rate-distortion cost, whether to apply LIC when performing inter prediction on the current block, the method further comprises:

in response to determining to apply LIC, setting an LIC usage flag of the current block to be true and signalling the LIC usage flag into a bitstream; and
when an LIC mode with the minimum rate-distortion cost during trial encoding is the LIC_TL mode, setting an extended LIC flag of the current block to be false and signalling the extended LIC flag into the bitstream; when the LIC mode with the minimum rate-distortion cost during trial encoding is the LIC_T mode or the LIC_L mode, setting the extended LIC flag of the current block to be true and signalling the extended LIC flag into the bitstream.

15. The method of claim 14, wherein when the LIC mode with the minimum rate-distortion cost during trial encoding is the LIC_T mode or the LIC_L mode, the method further comprises:

skipping encoding a mode index when only the top neighbouring reconstructed samples or only the left neighbouring reconstructed samples of the current block are available; encoding and signalling a mode index of an LIC mode with the minimum rate-distortion cost into the bitstream when both the top neighbouring reconstructed samples and the left neighbouring reconstructed samples of the current block are available.

16. The method of claim 11 or 12, wherein determining the LIC mode applied during trial encoding of the current block according to availability of the neighbouring reconstructed samples of the current block comprises:
determining to apply an LIC_TL mode during trial encoding on the current block when only top neighbouring reconstructed samples or only left neighbouring reconstructed samples of the current block are available.

17. The method of claim 16, wherein after determining, according to the rate-distortion cost, whether to apply LIC when performing inter prediction on the current block, the method further comprises:

in response to determining to apply LIC, setting an LIC usage flag of the current block to be true and signalling the LIC usage flag into a bitstream; and
skipping encoding a mode index of an LIC mode and an extended LIC flag of the current block when only the top neighbouring reconstructed samples or only the left neighbouring reconstructed samples of the current block are available.

18. The method of claim 17, wherein in response to determining to apply LIC, the method further comprises:
in response to both the top neighbouring reconstructed samples and the left neighbouring reconstructed samples of the current block being available,

when an LIC mode with the minimum rate-distortion cost during trial encoding is an LIC_TL mode, setting the extended LIC flag of the current block to be false and signalling the extended LIC flag into the bitstream; when the LIC mode with the minimum rate-distortion cost is an LIC_T mode or an LIC_L mode, setting the extended LIC flag of the current block to be true and signalling the extended LIC flag into the bitstream, and encoding a mode index of the LIC mode with the minimum rate-distortion cost and signalling the mode index into the bitstream.

19. The method of claim 11, wherein performing trial encoding on the current block by applying the determined LIC mode comprises:
when performing trial encoding on the current block by applying an LIC_TL mode,

when only top neighbouring reconstructed samples of the current block are available, determining, according to a width of the current block, the number of reconstructed samples selected for calculating an LIC model parameter; when only left neighbouring reconstructed samples of the current block are available, determining, according to a height of the current block, the number of reconstructed samples selected for calculating the LIC model parameter.

20. A video encoding method, comprising:

when a first inter mode is applied to a current block, obtaining a sequence-level syntax element and a picture-level syntax element related to local illumination compensation (LIC); and
applying LIC when performing inter prediction on the current block according to the method of any of claims 11 to 19, in response to determining, according to the sequence-level syntax element and the picture-level syntax element, that LIC is enabled for inter prediction of the current block.

21. The method of claim 20, wherein the first inter mode comprises at least one of:

a merge mode in a uni-directional reference mode, but not applied together with a combined inter-intra prediction (CIIP) mode, a geometric partitioning mode (GPM), or an affine mode in the merge mode in the uni-directional reference mode; or
a merge mode in a bi-directional reference mode, but not applied together with a bi-directional optical flow (BDOF) mode, a decoder-side motion vector derivation mode, or a bi-prediction with coding unit-level weights (BCW) mode in the merge mode in the bi-directional reference mode.

22. The method of claim 21, further comprising:
during construction of a motion vector prediction (MVP) list in the merge mode, a mode index of an LIC mode and an LIC usage flag of the current block inherit those of a neighbouring block or a corresponding prediction block, or the LIC usage flag of the current block inherits that of the neighbouring block or the corresponding prediction block, and a mode index of an LIC_top-and-left (LIC_TL) mode is used as a default mode index.

23. A local illumination compensation (LIC) apparatus, comprising:

a memory configured to store computer programs; and
a processor configured to implement the LIC method of any of claims 1 to 7 or claims 11 to 19 when executing the computer programs.

24. A video decoding apparatus, comprising:

a memory configured to store computer programs; and
a processor configured to implement the video decoding method of any of claims 8 to 10 when executing the computer programs.

25. A video encoding apparatus, comprising:

a memory configured to store computer programs; and
a processor configured to implement the video encoding method of any of claims 20 to 22 when executing the computer programs.

26. A video coding system, comprising the video encoding apparatus of claim 25 and the video decoding apparatus of claim 24.

27. A non-transitory computer-readable storage medium, configured to store computer programs which, when executed by a processor, are operable to implement the local illumination compensation (LIC) method of any of claims 1 to 7 and 11 to 19, or implement the video decoding method of any of claims 8 to 10, or implement the video encoding method of any of claims 20 to 22.

28. A bitstream, generated according to the video encoding method of any of claims 20 to 22.

ENCODING-END APPARATUS

```
      11              13                    15       1
   ┌─────────┐    ┌──────────┐         ┌──────────┐
   │  DATA   │    │  VIDEO   │         │ OUTPUT   │
   │ SOURCE  │───▶│ ENCODING │────────▶│INTERFACE │
   │         │    │APPARATUS │         │          │
   └─────────┘    └──────────┘         └──────────┘
```

```
                            3                              2
                                            DECODING-END APPARATUS
              21               23               25
         ┌──────────┐    ┌──────────┐    ┌──────────┐
         │  INPUT   │    │  VIDEO   │    │ DISPLAY  │
         │INTERFACE │───▶│ DECODING │───▶│APPARATUS │
         │          │    │APPARATUS │    │          │
         └──────────┘    └──────────┘    └──────────┘
```

FIG. 1A

FIG. 1B

FIG. 1C

FIG. 2A          FIG. 2B

RECONSTRUCTED SAMPLES

REFERENCE BLOCK

FIG. 3A

RECONSTRUCTED SAMPLES

CURRENT BLOCK

FIG. 3B

REFERENCE PICTURE

CURRENT PICTURE

$PredCU'=aPredCU+b$

FIG. 4

REFERENCE BLOCK

CURRENT BLOCK

$PredCU'=aPredCU+b$

FIG. 5A

FIG. 5B

FIG. 6

210

OBTAIN SEQUENCE-LEVEL SYNTAX ELEMENT AND PICTURE-
LEVEL SYNTAX ELEMENT RELATED TO LIC, IF FIRST INTER
MODE IS APPLIED TO CURRENT BLOCK

220

APPLY LIC WHEN PERFORMING INTER PREDICTION ON
CURRENT BLOCK ACCORDING TO METHOD APPLIED TO
ENCODING END DESCRIBED IN ANY EMBODIMENT OF THE
DISCLOSURE, IF LIC IS DETERMINED TO BE ENABLED FOR
INTER PREDICTION OF CURRENT BLOCK ACCORDING TO
SEQUENCE-LEVEL SYNTAX ELEMENT AND PICTURE-LEVEL
SYNTAX ELEMENT

FIG. 7

310

PARSE LIC USAGE FLAG OF CURRENT BLOCK

320

DETERMINE LIC MODE APPLIED TO CURRENT BLOCK
ACCORDING TO AVAILABILITY OF NEIGHBOURING
RECONSTRUCTED SAMPLES OF CURRENT BLOCK, IF LIC IS
DETERMINED TO BE APPLIED TO CURRENT BLOCK
ACCORDING TO LIC USAGE FLAG

330

APPLY LIC ACCORDING TO DETERMINED LIC MODE, WHEN
PERFORMING INTER PREDICTION ON CURRENT BLOCK

FIG. 8

410

OBTAIN SEQUENCE-LEVEL SYNTAX ELEMENT AND PICTURE-LEVEL SYNTAX ELEMENT RELATED TO USAGE OF LIC, IF FIRST INTER MODE IS DETERMINED TO BE APPLIED TO CURRENT BLOCK

420

APPLY LIC WHEN PERFORMING INTER PREDICTION ON CURRENT BLOCK ACCORDING TO LIC METHOD APPLIED TO DECODING END IN ANY EMBODIMENT OF THE DISCLOSURE, IF LIC IS DETERMINED TO BE ENABLED FOR INTER PREDICTION OF CURRENT BLOCK ACCORDING TO SEQUENCE-LEVEL SYNTAX ELEMENT AND PICTURE-LEVEL SYNTAX ELEMENT

FIG. 9

71

PROCESSOR

73

MEMORY

FIG. 10

# INTERNATIONAL SEARCH REPORT

| International application No. |
| --- |
| **PCT/CN2022/099886** |

| **A.** | **CLASSIFICATION OF SUBJECT MATTER** |
| --- | --- |
| | H04N 19/52(2014.01)i |

According to International Patent Classification (IPC) or to both national classification and IPC

| **B.** | **FIELDS SEARCHED** |
| --- | --- |

Minimum documentation searched (classification system followed by classification symbols)

    IPC:H04N

Documentation searched other than minimum documentation to the extent that such documents are included in the fields searched

Electronic data base consulted during the international search (name of data base and, where practicable, search terms used)

    CNABS, CNTXT, CNKI, VEN, USTXT, EPTXT, WOTXT, JVET: 局部照明补偿, 编码, 解码, 帧间, 合并, 左, 上, 样本, 标志符, 标识, 重构, 线形, 率失真, Local Illumination Compensation, LIC, encode, decode, inter frame, merge, left, top, sample, flag, reconstruct, linear, rate distortion

| **C.** | **DOCUMENTS CONSIDERED TO BE RELEVANT** | |
| --- | --- | --- |
| Category* | Citation of document, with indication, where appropriate, of the relevant passages | Relevant to claim No. |
| X | WO 2022116119 A1 (GUANGDONG OPPO MOBILE TELECOMMUNICATIONS CORP., LTD.) 09 June 2022 (2022-06-09)<br>    description, paragraphs [0076]-[0266], and figures 1-15 | 1-6, 8-18, 20-28 |
| Y | WO 2022116119 A1 (GUANGDONG OPPO MOBILE TELECOMMUNICATIONS CORP., LTD.) 09 June 2022 (2022-06-09)<br>    description, paragraphs [0076]-[0266], and figures 1-16 | 7, 19 |
| Y | CN 113557730 A (INTERDIGITAL VC HOLDINGS, INC.) 26 October 2021 (2021-10-26)<br>    description, paragraphs [0046]-[0123], and figures 1-18 | 7, 19 |
| X | WO 2022116246 A1 (GUANGDONG OPPO MOBILE TELECOMMUNICATIONS CORP., LTD.) 09 June 2022 (2022-06-09)<br>    description, paragraphs [0078]-[0266], and figures 1-16 | 1-6, 8-18, 20-28 |
| X | EP 3668100 A1 (INTERDIGITAL VC HOLDINGS, INC.) 17 June 2020 (2020-06-17)<br>    description, paragraphs [0046]-[0088], and figures 1-16 | 1, 11, 23-28 |
| A | CN 111698515 A (HUAWEI TECHNOLOGIES CO., LTD.) 22 September 2020 (2020-09-22)<br>    entire document | 1-28 |

☑ Further documents are listed in the continuation of Box C.      ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **19 March 2023** | **20 March 2023** |

| Name and mailing address of the ISA/CN | Authorized officer |
| --- | --- |
| **China National Intellectual Property Administration (ISA/CN)**<br>**China No. 6, Xitucheng Road, Jimenqiao, Haidian District, Beijing 100088** | |
| Facsimile No. **(86-10)62019451** | Telephone No. |

Form PCT/ISA/210 (second sheet) (July 2022)

**INTERNATIONAL SEARCH REPORT**

| International application No. |
| --- |
| **PCT/CN2022/099886** |

**C.     DOCUMENTS CONSIDERED TO BE RELEVANT**

| Category* | Citation of document, with indication, where appropriate, of the relevant passages | Relevant to claim No. |
| --- | --- | --- |
| A | CN 113170152 A (HUAWEI TECHNOLOGIES CO., LTD.) 23 July 2021 (2021-07-23) entire document | 1-28 |

Form PCT/ISA/210 (second sheet) (July 2022)

INTERNATIONAL SEARCH REPORT
Information on patent family members

International application No.

**PCT/CN2022/099886**

| Patent document cited in search report | | | Publication date (day/month/year) | Patent family member(s) | | | Publication date (day/month/year) |
|---|---|---|---|---|---|---|---|
| WO | 2022116119 | A1 | 09 June 2022 | None | | | |
| CN | 113557730 | A | 26 October 2021 | EP | 3939291 | A1 | 19 January 2022 |
| | | | | EP | 3709648 | A1 | 16 September 2020 |
| | | | | KR | 20210134034 | A | 08 November 2021 |
| | | | | WO | 2020185496 | A1 | 17 September 2020 |
| | | | | US | 2022159277 | A1 | 19 May 2022 |
| WO | 2022116246 | A1 | 09 June 2022 | None | | | |
| EP | 3668100 | A1 | 17 June 2020 | WO | 2020061302 | A1 | 26 March 2020 |
| | | | | CN | 112771874 | A | 07 May 2021 |
| | | | | KR | 20210058938 | A | 24 May 2021 |
| | | | | BR | 112021004943 | A2 | 01 June 2021 |
| | | | | EP | 3854098 | A1 | 28 July 2021 |
| | | | | US | 2021377517 | A1 | 02 December 2021 |
| CN | 111698515 | A | 22 September 2020 | None | | | |
| CN | 113170152 | A | 23 July 2021 | WO | 2020149770 | A1 | 23 July 2020 |
| | | | | EP | 3868098 | A1 | 25 August 2021 |
| | | | | EP | 3868098 | A4 | 29 December 2021 |
| | | | | US | 2021352277 | A1 | 11 November 2021 |

Form PCT/ISA/210 (patent family annex) (July 2022)